(19)

Europäisches
Patentamt
European
Patent Office
Office européen
des brevets

(11) **EP 2 996 272 A1**

(12) **EUROPEAN PATENT APPLICATION**
published in accordance with Art. 153(4) EPC

(43) Date of publication:
**16.03.2016 Bulletin 2016/11**

(21) Application number: **13884353.7**

(22) Date of filing: **10.05.2013**

(51) Int Cl.:
**H04L 1/00** *(2006.01)*     **H04L 1/18** *(2006.01)*

(86) International application number:
**PCT/CN2013/075501**

(87) International publication number:
**WO 2014/179996 (13.11.2014 Gazette 2014/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Fujitsu Limited**
**Kawasaki-shi, Kanagawa 211-8588 (JP)**

(72) Inventors:
• **ZHANG, Yi**
**Beijing 100025 (CN)**

• **ZHANG, Jian**
**Beijing 100025 (CN)**
• **SONG, Lei**
**Beijing 100025 (CN)**
• **WANG, Yi**
**Beijing 100025 (CN)**
• **ZHOU, Hua**
**Beijing 100025 (CN)**

(74) Representative: **Hutchison, James**
**Haseltine Lake LLP**
**300 High Holborn**
**London, Greater London WC1V 7JH (GB)**

(54) **INFORMATION FEEDBACK METHOD, USER EQUIPMENT, AND BASE STATION**

(57)     Embodiments of the present disclosure provide a method for feeding back information, UE and base station. The method for feeding back information includes: the UE supports an aperiodic feedback mode 3-2; and when the number of bits of a CSI request is 1 and an aperiodic report is triggered, or when the number of bits of a CSI request is 2 and an aperiodic report of one cell is triggered, a maximum number of physical resource blocks used for feedback by the UE is one of 5-8. With the embodiments of the present disclosure, information feedback under MIMO may be enhanced, and a technical solution for information feedback may be further optimized.

101

> When the number of bits of a CSI request is 1 and an aperiodic report is triggered, a maximum number of physical resource blocks used for feedback by the UE is one of 5-8

**Fig. 1**

EP 2 996 272 A1

## Description

### Technical Field

The present disclosure relates to the field of communications, and in particular to a method for feeding back information, UE and base station supporting an enhanced MIMO technique in a LTE-A system.

### Background

A multiple input multiple output (MIMO) technique is introduced into an LTE-A system, in which multiple transmission antennas are used to increase reliability and rate of system transmission. In order to further increase a spectral efficiency of the system, the system further supports a multiple user multiple input multiple output (MU-MIMO) technique. And multiple transmission antennas at a base station end serve for multiple users in the same time-frequency resources.

The MU-MIMO needs to use a precoding technique to reduce inter-user interference, so as to achieve parallel transmission of user data streams. In order to select good precoding, a base station end needs to acquire accurate downlink information, which is achieved by feedback by a user end in an FDD system. A legacy 4-antenna system uses a structure of a single-codeword codebook for feedback. The MU-MIMO technique has a relatively high requirement on accuracy of the feedback, and there exists a tradeoff between feedback overhead and feedback granularity in the system.

Currently, there appear dual codebooks different from the single-codeword codebook, which use characteristics of long-term and short-term changes of system channels to quantize and feed back the channels. For example, W1 denotes long-term wideband information, and W2 denotes short-term information. For a small-spacing dual polarization antenna system, codebooks of a dual-codebook structure use the antenna characteristics, and relatively good feedback granularity is obtained; and for a large-spacing dual polarization antenna system, a legacy single-antenna codeword is relatively robust. Hence, in an LTE R12 system, a base station may configure a user with appropriate codebooks according to actual antenna configuration and transmission environment.

For 4-antenna dual codebooks, a grid of beam (GoB) structure is adopted. For example, each column of W1 denotes a beam direction, and beam directions of different codewords of W1 are overlapped to a certain extent. The number of the codewords of W1 is 16 (when a rank is 1 and 2); and W2 denotes a weighted combination of beam selection and different polarization antennas, and the number of its codewords is 16 or 8 (which has not been determined at present).

For example, for a rank R=1, 2, W1 is defined as follows:

$$\mathbf{W}_1 = \begin{bmatrix} \mathbf{X}_n & 0 \\ 0 & \mathbf{X}_n \end{bmatrix}, n = 0,1,..,N_1 - 1,$$

$$\mathbf{X}_n = \begin{bmatrix} 1 & 1 & \cdots & 1 \\ q_1^{a_{1,n}} & q_1^{a_{2,n}} & \cdots & q_1^{a_{CR,n}} \end{bmatrix};$$

where, Xn is a 2 x CR matrix, which is a column of a discrete Fourier transform (DFT) matrix, $q_1 = e^{2\pi j/Q1}$, N1 is the number of the codewords per rank of W1, such as 16; and Q1 is a beam granularity of W1, which has not been determined at present.

For the block diagonal matrix Xn, CR is a total number of beams, such as 4, and $a_{1,n}$, ..., $a_{CR,n}$ are beam coefficients for determining beam directions.

W2 is defined as follows: W2 is a 2CR x R matrix, as shown below:

$$\mathbf{W}_2 = \begin{bmatrix} \mathbf{a}_1 & \cdots & \mathbf{a}_R \end{bmatrix},$$

$$\mathbf{a}_r = \begin{pmatrix} q_2^{m_{r1}} \mathbf{y}_{r1} \\ q_2^{m_{r2}} \mathbf{y}_{r2} \end{pmatrix} \text{ where } \mathbf{y}_{r1}, \mathbf{y}_{r2} \in \{\mathbf{e}_1,...,\mathbf{e}_c\} \text{ and } q_2 = e^{2\pi j/Q_2};$$

where, $e_i$ is a selection vector, with all elements being 0, with an exception that elements in an *i-th* row being 1; N2 is the number of the codewords per rank of W2, such as 16 or 8 (not determined), and Q2 is a coefficient of weight vectors in two polarization directions.

For each $a_r$, $y_{r1}$ is a beam selection vector in a first polarization direction, $y_{r2}$ is a beam selection vector in a second polarization direction, $m_{r1}$ is phase rotation in the first polarization direction, and $m_{r2}$ is phase rotation in the second polarization direction.

For example, a form of implementation is:

for rank=1,

$$\mathbf{W}_2 \in C_2 = \left\{ \frac{1}{\sqrt{2}} \begin{bmatrix} \mathbf{Y}_1 \\ \mathbf{Y}_2 \end{bmatrix}, \frac{1}{\sqrt{2}} \begin{bmatrix} \mathbf{Y}_1 \\ j\mathbf{Y}_2 \end{bmatrix}, \frac{1}{\sqrt{2}} \begin{bmatrix} \mathbf{Y}_1 \\ -\mathbf{Y}_2 \end{bmatrix}, \frac{1}{\sqrt{2}} \begin{bmatrix} \mathbf{Y}_1 \\ -j\mathbf{Y}_2 \end{bmatrix} \right\} \quad \mathbf{Y}_1, \mathbf{Y}_2 \in \left\{ \tilde{\mathbf{e}}_1, \tilde{\mathbf{e}}_2, \tilde{\mathbf{e}}_3, \tilde{\mathbf{e}}_4 \right\},$$

and for rank=2,

$$\mathbf{W}_2 \in C_2 = \left\{ \frac{1}{2} \begin{bmatrix} \mathbf{Y}_1 & \mathbf{Y}_1 \\ \mathbf{Y}_2 & -\mathbf{Y}_2 \end{bmatrix}, \frac{1}{2} \begin{bmatrix} \mathbf{Y}_1 & \mathbf{Y}_1 \\ j\mathbf{Y}_2 & -j\mathbf{Y}_2 \end{bmatrix} \right\}.$$

On the other hand, in an LTE Rel.10 system, manners of periodic and aperiodic feedback are proposed for providing feedback information of different granularities to users, so as to improve the performance of the system.

For a transmission mode 9/10, when PMI/RI feedback is used, a periodic feedback mode supported by users includes mode 1-1, and mode 2-1, etc.

The user uses the mode 1-1 to feed back rank indication (RI) and wideband precoding matrix indicator (PMI)/channel quality indicator (CQI) information. When the system configures 8 antenna ports, it includes two sub-modes. For example, a first frame of a sub-mode 1 feeds back the RI and wideband first PMI (PMI W1), and a second subframe feeds back wideband second PMI (PMI W2) and wideband CQI information; and a first frame of a sub-mode 2 feeds back the RI, and a second frame feeds back the wideband PMI W1, PMI W2 and CQI information.

The user uses the mode 2-1 to feed back the RI, wideband PMI/CQI and subband CQI and a subband index. When the system configures 8 antenna ports, a first frame feeds back RI and PTI (precoding type indication) information, when PTI=0, a second subframe feeds back wideband PMI W1 information, and a third subframe feeds back wideband PMI W2 and wideband CQI information; and when PTI=1, the second subframe feeds back wideband PMI W2 and wideband CQI information, and the third subframe feeds back subband PMI W2, subband CQI information and a subband index.

As for the aperiodic feedback, when a user uses the PMI/RI feedback, an aperiodic feedback mode supported by it includes a mode 1-2, a mode 2-2 and a mode 3-1. For example, the mode 1-2 corresponds to a feedback mode of wideband CQI and subband PMI, the mode 2-2 corresponds to a feedback mode of wideband PMI, CQI, and PMI and CQI of best M subbands selected by the user, and the mode 3-1 corresponds to a feedback mode of wideband PMI and subband CQI. For the aperiodic feedback mode 3-1, contents fed back by it are as shown in tables 1 and 2, corresponding respectively to contents fed back in a case of 2/4 antenna ports and a case of 8 antenna ports.

Table 1

| Field | Bit width | | | |
| --- | --- | --- | --- | --- |
| | 2 antenna ports | | 4 antenna ports | |
| | Rank=1 | Rank=2 | Rank=1 | Rank>1 |
| Wideband CQI codeword 0 | 4 | 4 | 4 | 4 |
| Subband differential CQI codeword 0 | 2N | 2N | 2N | 2N |
| Wideband CQI codeword 1 | 0 | 4 | 0 | 4 |
| Subband differential CQI codeword 1 | 0 | 2N | 0 | 2N |
| PMI | 2 | 1 | 4 | 4 |

Table 2

| Field | Bit width | | | |
|---|---|---|---|---|
| | Rank=1 | Rank=2 | Rank=3 | Rank=4 |
| Wideband CQI codeword 0 | 4 | 4 | 4 | 4 |
| Subband differential CQI codeword 0 | $2N$ | $2N$ | $2N$ | $2N$ |
| Wideband CQI codeword 1 | 0 | 4 | 4 | 4 |
| Subband differential CQI codeword 1 | 0 | $2N$ | $2N$ | $2N$ |
| Wideband first PMI i1 | 4 | 4 | 2 | 2 |
| Subband second PMI i2 | 4 | 4 | 4 | 3 |

| Field | Bit width | | | |
|---|---|---|---|---|
| | Rank=5 | Rank=6 | Rank=7 | Rank=8 |
| Wideband CQI codeword 0 | 4 | 4 | 4 | 4 |
| Subband differential CQI codeword 0 | $2N$ | $2N$ | $2N$ | $2N$ |
| Wideband CQI codeword 1 | 4 | 4 | 4 | 4 |
| Subband differential CQI codeword 1 | $2N$ | $2N$ | $2N$ | $2N$ |
| Wideband first PMI i1 | 2 | 2 | 2 | 0 |
| Subband second PMI i2 | 0 | 0 | 0 | 0 |

In the aperiodic feedback, a bit cascade order is: cascade is performed according to an order of bit information of each domain; and if there exist multiple subband information in the domain, the cascade is performed according to an ascending order of subband indexes.

In the RAN1 72b conference, a new aperiodic feedback mode 3-2 was introduced into an enhanced MIMO system, which includes 4-bit wideband CQI information, 2-bit differential CQI information of each subband, wideband PMI1 information, and PMI2 information of each subband. A related conclusion of the aperiodic feedback mode 3-2 is as follows: it is assumed that subband granularities of PMI/CQI are identical, and are identical to those in existing specifications. For example, a differential CQI coding scheme and a system feedback wideband configuration are as shown in tables 3 and 4.

Table 3

| Subband differential CQI value | Offset level |
|---|---|
| 0 | 0 |
| 1 | 1 |
| 2 | $\geq 2$ |
| 3 | $\leq -1$ |

Table 4

| System bandwidth $N_{\mathrm{RB}}^{\mathrm{DL}}$ | Subband size (k) |
|---|---|
| 6 - 7 | NA |
| 8 - 10 | 4 |
| 11 - 26 | 4 |
| 27 - 63 | 6 |

(continued)

| System bandwidth $N_{\mathrm{RB}}^{\mathrm{DL}}$ | Subband size (k) |
|---|---|
| 64 - 110 | 8 |

When a user uses PMI/RI for reporting, the aperiodic feedback mode 3-2 may be configured in transmission modes 8, 9 and 10 based on DM-RS; and when a codebook of R8 (i.e. a codebook of a single codeword) is used, the aperiodic feedback mode 3-2 may also be configured in transmission modes 4 and 6.

However, it was found by the inventors that there actually exists a tradeoff between feedback overhead and a system performance gain, and existing technical solutions of information feedback for MIMO are not optimized sufficiently.

It should be noted that the above description of the background is merely provided for clear and complete explanation of the present disclosure and for easy understanding by those skilled in the art. And it should not be understood that the above technical solution is known to those skilled in the art as it is described in the background of the present disclosure.

Summary

Embodiments of the present disclosure provide a method for feeding back information, UE and base station, with an object being to further enhance information feedback under MIMO and further optimize technical solutions of information feedback.

According to an aspect of the embodiments of the present disclosure, there is provided a method for transmitting uplink control information, wherein UE is configured to use an aperiodic feedback mode 3-2, and the method includes:

when the number of bits of a channel state information (CSI) request is 1 and an aperiodic report is triggered, a maximum number of physical resource blocks used for feedback by the UE is one of 5-8; or

when the number of bits of a CSI request is 2 and an aperiodic report of one cell is triggered, the maximum number of physical resource blocks used for feedback by the UE is one of 5-8.

According to another aspect of the embodiments of the present disclosure, there is provided a method for configuring uplink control information, wherein UE is configured to use an aperiodic feedback mode 3-2, and the method includes:

when the number of bits of a CSI request is 1 and an aperiodic report is triggered, a maximum number of physical resource blocks used for feedback configured by a base station for the UE is one of 5-8; or

when the number of bits of a CSI request is 2 and an aperiodic report of one cell is triggered, the maximum number of physical resource blocks configured by the base station for the UE for feedback is one of 5-8.

According to still another aspect of the embodiments of the present disclosure, there is provided a method for feeding back information, including:

not expecting, by UE, to receive a signaling of configuring different codebooks for a CSI process of a reference RI and a linked CSI process, when a base station configures the UE with the CSI process of the reference RI.

According to still another aspect of the embodiments of the present disclosure, there is provided a method for configuring information, including:

configuring, by a base station, a CSI process of a reference RI of UE with the same codebooks as those of a linked CSI process.

According to still another aspect of the embodiments of the present disclosure, there is provided a method for feeding back information, wherein UE is configured to use a periodic feedback mode 2-1 and use dual codebooks, and the method includes:

when subband granularities of a PMI and a CQI are different, selecting a relatively small subband granularity by the UE as a joint subband granularity of the PMI and CQI.

According to still another aspect of the embodiments of the present disclosure, there is provided a method for feeding back information, wherein UE is configured to use dual codebooks, and the method includes:

limiting a size of a wideband first PMI within a range not exceeding 3 bits, when the UE uses a sub-mode 1 of a periodic feedback mode 1-1 and the rank is 1 or 2.

According to still another aspect of the embodiments of the present disclosure, there is provided a method for feeding back information, wherein UE is configured to use dual codebooks, and the method includes:

feeding back, by UE in using a periodic feedback mode 2-1, a subband second PMI, a subband CQI and a subband index in a third frame by using 11 bits.

According to still another aspect of the embodiments of the present disclosure, there is provided a method for feeding back information, wherein UE is configured to use dual codebooks, and the method includes:

limiting a size of a wideband first PMI within a range not exceeding 3 bits, when the UE uses a sub-mode 2 of a periodic feedback mode 1-1.

According to still another aspect of the embodiments of the present disclosure, there is provided a method for feeding back information, including:

feeding back, by UE, a subband PMI, a subband CQI and a subband index by using one frame.

According to still another aspect of the embodiments of the present disclosure, there is provided a method for feeding back information, including:

reporting, by UE to a base station, indication information indicating a feedback granularity, so that the base station obtains an adjusted feedback granularity of the UE according to the indication information.

According to still another aspect of the embodiments of the present disclosure, there is provided UE, including:

a feedback unit configured to feed back by using an aperiodic feedback mode 3-2; wherein when the number of bits of a CSI request is 1 and an aperiodic report is triggered, a maximum number of physical resource blocks for feedback is one of 5-8; or
when the number of bits of a CSI request is 2 and an aperiodic report of one cell is triggered, the maximum number of physical resource blocks for feedback is one of 5-8.

According to still another aspect of the embodiments of the present disclosure, there is provided a base station, including:

a configuring unit configured to configure resources in a case where UE supports an aperiodic feedback mode 3-2; wherein when the number of bits of a CSI request is 1 and an aperiodic report is triggered, a maximum number of physical resource blocks for feedback configured for the UE is one of 5-8; or
when the number of bits of a CSI request is 2 and an aperiodic report of one cell is triggered, the maximum number of physical resource blocks for feedback configured for the UE is one of 5-8.

According to still another aspect of the embodiments of the present disclosure, there is provided UE, including:

a feedback unit configured to, in configuring a reference RI process, not to use codebooks configured by a base station for the reference RI process different from codebooks of a linked CSI process.

According to still another aspect of the embodiments of the present disclosure, there is provided a base station, including:

a configuring unit configured to configure a reference RI process of UE with the same codebooks as those of a linked CSI process.

According to still another aspect of the embodiments of the present disclosure, there is provided UE, including:

a feedback unit configured to use a periodic feedback mode 2-1 and use dual codebooks; wherein when subband granularities of a PMI and a CQI are different, a relatively small subband granularity is selected as a joint subband granularity of the PMI and CQI.

According to still another aspect of the embodiments of the present disclosure, there is provided UE, including:

a feedback unit configured to use a sub-mode 1 of a periodic feedback mode 1-1 for feedback; wherein when a rank is 1 or 2, a size of a wideband first PMI is limited within a range not exceeding 3 bits.

According to still another aspect of the embodiments of the present disclosure, there is provided UE, including:

a feedback unit configured to use a periodic feedback mode 2-1 for feedback; wherein a subband second PMI, a subband CQI and a subband index in a third frame are fed back by using 11 bits.

According to still another aspect of the embodiments of the present disclosure, there is provided UE, including:

a feedback unit configured to limit a size of a wideband first PMI within a range not exceeding 3 bits when a sub-mode 2 of a periodic feedback mode 1-1 is used for feedback.

According to still another aspect of the embodiments of the present disclosure, there is provided UE, including:

a feedback unit configured to use a first frame to feed back RI, use a second frame to feed back a wideband PMI and a wideband CQI, and use a third frame to feed back a subband PMI, a subband CQI and a subband index.

According to still another aspect of the embodiments of the present disclosure, there is provided UE, including:

a feedback unit configured to report indication information indicating a feedback granularity to a base station, so that the base station obtains an adjusted feedback granularity of the UE according to the indication information.

According to still another aspect of the embodiments of the present disclosure, there is provided a communication system, including the UE as described above and the base station as described above.

According to still another aspect of the embodiments of the present disclosure, there is provided a computer-readable program, wherein when the program is executed in UE, the program enables a computer to carry out the method for feeding back information as described above in the UE.

According to still another aspect of the embodiments of the present disclosure, there is provided a storage medium in which a computer-readable program is stored, wherein the computer-readable program enables a computer to carry out the method for feeding back information as described above in UE.

According to still another aspect of the embodiments of the present disclosure, there is provided a computer-readable program, wherein when the program is executed in a base station, the program enables a computer to carry out the method for configuring information as described above in the base station.

According to still another aspect of the embodiments of the present disclosure, there is provided a storage medium in which a computer-readable program is stored, wherein the computer-readable program enables a computer to carry out the method for configuring information as described above in a base station.

An advantage of the embodiments of the present disclosure exists in that information feedback under MIMO is enhanced, and technical solutions of information feedback are further optimized.

With reference to the following description and drawings, the particular embodiments of the present disclosure are disclosed in detail, and the principles of the present disclosure and the manners of use are indicated. It should be understood that the scope of the embodiments of the present disclosure is not limited thereto. The embodiments of the present disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprise/include" when used in this specification is taken to specify the presence of stated features, integers, steps or components but does not preclude the presence or addition of one or more other features, integers, steps, components or groups thereof.

Brief Description of the Drawings

Many aspects of the disclosure can be better understood with reference to the following drawings. The components in the drawings are not necessarily to scale, emphasis instead being placed upon clearly illustrating the principles of the present disclosure. To facilitate illustrating and describing some parts of the disclosure, corresponding portions of the drawings may be exaggerated or reduced.

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiment.

Figure 1 is a flowchart of the method for transmitting uplink control information of Embodiment 1 of the present disclosure;

Figure 2 is another flowchart of the method for transmitting uplink control information of Embodiment 1 of the present disclosure;

Figure 3 is still another flowchart of the method for transmitting uplink control information of Embodiment 1 of the present disclosure;

Figure 4 is still another flowchart of the method for transmitting uplink control information of Embodiment 1 of the present disclosure;

Figure 5 is a schematic diagram of a structure of the UE of Embodiment 1 of the present disclosure;

Figure 6 is still another flowchart of the method for configuring uplink control information of Embodiment 1 of the present disclosure;

Figure 7 is still another flowchart of the method for configuring uplink control information of Embodiment 1 of the present disclosure;

Figure 8 is still another flowchart of the method for configuring uplink control information of Embodiment 1 of the present disclosure;

Figure 9 is still another flowchart of the method for configuring uplink control information of Embodiment 1 of the present disclosure;

Figure 10 is a schematic diagram of a structure of the base station of Embodiment 1 of the present disclosure;

Figure 11 is a flowchart of the method for feeding back information of Embodiment 2 of the present disclosure;

Figure 12 is a schematic diagram of a structure of the UE of Embodiment 2 of the present disclosure;

Figure 13 is another flowchart of the method for configuring information of Embodiment 2 of the present disclosure;

Figure 14 is a schematic diagram of a structure of the base station of Embodiment 2 of the present disclosure;

Figure 15 is a flowchart of the method for feeding back information of Embodiment 3 of the present disclosure;

Figure 16 is a schematic diagram of a structure of the UE of Embodiment 3 of the present disclosure;

Figure 17 is a flowchart of the method for feeding back information of Embodiment 4 of the present disclosure;

Figure 18 is another flowchart of the method for feeding back information of Embodiment 4 of the present disclosure;

Figure 19 is still another flowchart of the method for feeding back information of Embodiment 4 of the present disclosure;

Figure 20 is a schematic diagram of a structure of the UE of Embodiment 4 of the present disclosure;

Figure 21 is a flowchart of the method for feeding back information of Embodiment 5 of the present disclosure;

Figure 22 is a schematic diagram of a structure of the UE of Embodiment 5 of the present disclosure;

Figure 23 is a flowchart of the method for feeding back information of Embodiment 6 of the present disclosure;

Figure 24 is a schematic diagram of changing feedback granularity of Embodiment 6 of the present disclosure;

Figure 25 is a schematic diagram of a structure of the UE of Embodiment 6 of the present disclosure;

Figure 26 is a flowchart of the method for configuring information of Embodiment 6 of the present disclosure;

Figure 27 is a schematic diagram of a structure of the base station of Embodiment 6 of the present disclosure; and

Figure 28 is a schematic diagram of a structure of the communication system of Embodiment 6 of the present disclosure.

Detailed Description

These and further aspects and features of the present disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims.

Embodiment 1

An embodiment of the present disclosure provides a method for transmitting uplink control information, which shall be described from a UE side. The UE is configured to use an aperiodic feedback mode 3-2. This embodiment is applicable to a physical uplink shared channel (PUSCH) only for transmission of uplink control information (UCI).

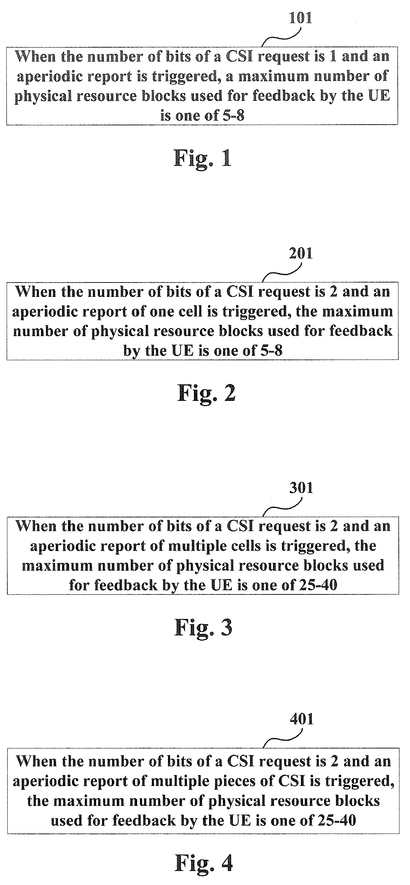

Fig. 1 is a flowchart of the method for transmitting uplink control information of the embodiment of the present disclosure. As shown in Fig. 1, the method for transmitting uplink control information includes:

step 101: when the number of bits of a CSI request is 1 and an aperiodic report is triggered, a maximum number of physical resource blocks used for feedback by the UE is one of 5-8.

Fig. 2 is another flowchart of the method for transmitting uplink control information of the embodiment of the present disclosure. As shown in Fig. 2, the method for transmitting uplink control information includes:

step 201: when the number of bits of a CSI request is 2 and an aperiodic report of one cell is triggered, the maximum number of physical resource blocks used for feedback by the UE is one of 5-8.

For example, the maximum number of the physical resource blocks fed back when the number of bits of the CSI request is 1 and the aperiodic report is triggered is identical to the maximum number of the physical resource blocks fed back when the number of bits of the CSI request is 2 and the aperiodic report of one cell is triggered; and when the maximum number of physical resource blocks (PRBs) used for feedback by the UE is one of 5-8, 5 or 6 may be preferred.

Fig. 3 is still another flowchart of the method for transmitting uplink control information of the embodiment of the present disclosure. As shown in Fig. 3, the method for transmitting uplink control information includes:

step 301: when the number of bits of a CSI request is 2 and an aperiodic report of multiple cells is triggered, the maximum number of physical resource blocks used for feedback by the UE is one of 25-40.

Fig. 4 is still another flowchart of the method for transmitting uplink control information of the embodiment of the present disclosure. As shown in Fig. 4, the method for transmitting uplink control information includes:

step 401: when the number of bits of a CSI request is 2 and an aperiodic report of multiple CSI is triggered, the maximum number of physical resource blocks used for feedback by the UE is one of 25-40.

For example, the maximum number of the physical resource blocks fed back when the number of bits of the CSI request is 2 and the aperiodic report of multiple cells is triggered is identical to the maximum number of the physical resource blocks fed back when the number of bits of the CSI request is 2 and the aperiodic report of multiple CSI is triggered; and when the maximum number of physical resource blocks used for feedback by the UE is one of 25-40, one of 25, 30-32 may be preferred.

In this embodiment, when the UE configures a transmission mode 9 or 10, PMI/RI is reported and dual codebooks are used, for feedback of 4 antenna ports, the subband second PMI is $K_1N_2$ bits when the rank is 1 or 2, $K_2N_2$ bits when the rank is 3, and $K_3N_2$ bits when the rank is 4; where $K_1$, $K_2$ and $K_3$ are constants decided by a size of W2 of the dual codebooks, and $N_2$ is the number of subbands of the PMI. Details are shown in Table 5.

Table 5

| Field | Bit width | | | |
|---|---|---|---|---|
| | Rank=1 | Rank=2 | Rank=3 | Rank=4 |
| Wideband CQI codeword 0 | 4 | 4 | 4 | 4 |
| Subband differential CQI codeword 0 | $2N_1$ | $2N_1$ | $2N_1$ | $2N_1$ |
| Wide-band CQI codeword 1 | 0 | 4 | 4 | 4 |
| Subband differential CQI codeword 1 | 0 | $2N_1$ | $2N_1$ | $2N_1$ |
| Wideband first PMI i1 | 4 | 4 | 2 | 2 |
| Subband second PMI i2 | $K_1N_2$ | $K_1N_2$ | $K_2N_2$ | $K_3N_2$ |

For example, $K_1K_2=K_3=4$, or, $K_1=K_2=4$ and $K_3=3$. However, the present disclosure is not limited thereto, and other data may also be used.

In this embodiment, when the UE configures a transmission mode 8, 9 or 10 and PMI/RI is reported, for feedback of 8 antenna ports, subband differential CQI codeword 0 is $2N_1$ bits when the rank is 1-8, subband differential CQI codeword 1 is $2N_1$ bits when the rank is 2-8, the subband second PMI is $4N_2$ bits when the rank is 1-3, and $3N_2$ bits when the rank is 4; where $N_1$ is the number of subbands of the CQI, and $N_2$ is the number of subbands of the PMI. Details are shown in Table 6.

Table 6

| Field | Bit width | | | |
|---|---|---|---|---|
| | Rank=1 | Rank=2 | Rank=3 | Rank=4 |
| Wideband CQI codeword 0 | 4 | 4 | 4 | 4 |
| Subband differential CQI codeword 0 | $2N_1$ | $2N_1$ | $2N_1$ | $2N_1$ |
| Wide-band CQI codeword 1 | 0 | 4 | 4 | 4 |
| Subband differential CQI codeword 1 | 0 | $2N_1$ | $2N_1$ | $2N_1$ |
| Wideband first PMI i1 | 4 | 4 | 2 | 2 |
| Subband second PMI i2 | $4N_2$ | $4N_2$ | $4N_2$ | $3N_2$ |

| Field | Bit width | | | |
|---|---|---|---|---|
| | Rank=5 | Rank=6 | Rank=7 | Rank=8 |
| Wideband CQI codeword 0 | 4 | 4 | 4 | 4 |
| Subband differential CQI codeword 0 | $2N_1$ | $2N_1$ | $2N_1$ | $2N_1$ |
| Wideband CQI codeword 1 | 4 | 4 | 4 | 4 |
| Subband differential CQI codeword 1 | $2N_1$ | $2N_1$ | $2N_1$ | $2N_1$ |
| Wideband first PMI i1 | 2 | 2 | 2 | 0 |
| Subband second PMI i2 | 0 | 0 | 0 | 0 |

For example, $N_1=N_2$, and may be in consistence with what is defined in R10 Specification. It should be noted that for the numerical values in tables 5 and 6, the present disclosure is not limited thereto, and adjustment may be performed according to an actual situation.

In this embodiment, the maximum number of the fed back physical resource blocks according to the size of the subband second PMI or the number of the subbands. Furthermore, the maximum number of the fed back physical resource blocks is less than or equal to the number of the physical resource blocks of the uplink resources configured by the base station for the UE.

Hence, maximum feedback overhead of the aperiodic feedback mode 3-2 may be 8N+12; where, N is the number of the subbands. Cases of maximum feedback overhead of several feedback modes are shown in Table 7 below:

Table 7

| | Maximum feedback overhead of 4 ports | Maximum feedback overhead of 8 ports |
|---|---|---|
| Mode 1-2 | 4N+8 | 4N+12 |
| Mode 2-2 | 20+L | 24+L |
| Mode 3-1 | 4N+12 | 4N+16 |
| Mode 3-2 | 8N+12 | 8N+12 |

Where, N is the number of the subbands, and L is related to the selected number of the subbands; for example, the number of bits needed by M subbands selected from N is $L = \log_2\left(C_N^M\right)$.

In this embodiment, for example, when the system bandwidth is 20M, N=$\lceil 100/8 \rceil$=13, and the maximum feedback overhead of the mode 3-2 is 8*13+12=116 bits; while maximum feedback overhead of an existing feedback mode, such as the mode 3-1, is 4*13+16=68. Hence, the feedback overhead of the mode 3-2 is increased by 0.7 time. If a PUSCH is used to only transmit CQI/PMI information, a maximum supported bandwidth is 4 PRBs; while after the mode 3-2 is introduced, the feedback overhead is increased by 0.7 time, which needs 2-3 PRBs to be added to satisfy a performance requirement.

That is, if a user is able to support the mode 3-2, its maximum configured PRBs are 6-7 PRBs, and the PUSCH is used to only transmit control information. Taking cases of carrier aggregation and multiple CSI processes into account, the maximum number of configured PRBs in this embodiment is as follows: when the number of bits of "CSI request" is 1 and the aperiodic report is triggered, the maximum $N_{PRB} \leq 5\text{-}8$ (such as 5 or 6); or, when the number of bits of "CSI request" is 2 and the aperiodic report of one cell is triggered, $N_{PRB} \leq 5 - 8$ (such as 5 or 6); or, when the number of bits of "CSI request" is 2 and the aperiodic report of multiple cells is triggered, $N_{PRB} \leq 25\text{-}40$ (such as 25, 30 or 32); or, when the number of bits of "CSI request" is 2 and the aperiodic report of multiple CSI is triggered, $N_{PRB} \leq 25\text{-}40$ (such as 25, 30 or 32).

An effect of adding PRBs shall be described below. For a UCI-only PUSCH, it is assumed that a sounding reference signal (SRS) in the PUSCH occupies one SC-FDMA symbol, ACK/NACK feedback information in a hybrid repeat request occupies four SC-FDMA symbols (in a case of most possible repeat), rank indicator (RI) information occupies four SC-FDMA symbols (in a case of most possible repeat), and a modulation scheme is QPSK.

For a normal cyclic prefix (CP) subframe, Table 8 shows QPSK code rate information in a case of UCI-only; and for an extended CP subframe, Table 9 shows QPSK code rate information in a case of UCI-only.

Table 8 QPSK code rate information in a case of UCI-only (a normal CP)

| A size of a CQI report (incl. CRC) | Contents of the PUSCH | | | | | | | |
|---|---|---|---|---|---|---|---|---|
| | CQI | CQI SRS | CQI A/N | CQI RI | CQIA/N SRS | CQI RI SRS | CQI A/N RI | CQI A/N RI SRS |
| 72(4 RBs) | 0,063 | 0,068 | 0,094 | 0,094 | 0,107 | 0,107 | 0,188 | 0,250 |
| 124(4 RBs) | 0.108 | 0.117 | 0.161 | 0.161 | 0.185 | 0.185 | 0.323 | **0.431** |
| 124(6 RBs) | 0.072 | 0.078 | 0.108 | 0.108 | 0.123 | 0.123 | 0.215 | 0.287 |

Table 9 QPSK code rate information in a case of UCI-only (an extended CP)

| A size of a CQI report (incl. CRC) | Contents of the PUSCH | | | | | | | |
|---|---|---|---|---|---|---|---|---|
| | CQI | CQI SRS | CQI A/N | CQI RI | CQIA/N SRS | CQI RI SRS | CQI A/N RI | CQI A/N RI SRS |
| 72(4 RBs) | 0,075 | 0,083 | 0,125 | 0,125 | 0,150 | 0,150 | **0,375** | **0,750** |
| 124(4 RBs) | 0.129 | 0.144 | 0.215 | 0.215 | 0.258 | 0.258 | **0.646** | **1.292** |
| 124(6 RBs) | 0,086 | 0,096 | 0,144 | 0,144 | 0,172 | 0,172 | **0,431** | **0,861** |

It can be seen from Table 8 that for the case of the normal CP, if being extended to 6 RBs, it may be ensured that the system code rate is less than 1/3, and the requirement on the system performance defined in R8 may be satisfied, for all cases of multiplexing. And it can be seen from Table 9 that for the case of the extended CP, when the PRBs in a case of UCI-only are extended to 6 RBs, an acceptable code rate may also be obtained, and the requirement on the performance in R8 may be basically satisfied.

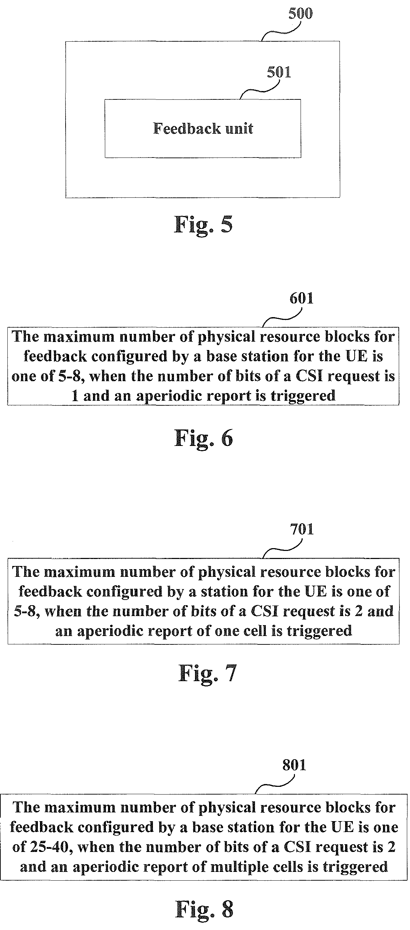

An embodiment of the present disclosure further provides UE. Fig. 5 is a schematic diagram of a structure of the UE of the embodiment of the present disclosure. As shown in Fig. 5, the UE 500 includes a feedback unit 501, and the relevant art may be referred to for other parts of the UE 500.

The feedback unit 501 is configured to feed back by using an aperiodic feedback mode 3-2; when the number of bits of a CSI request is 1 and an aperiodic report is triggered, a maximum number of physical resource blocks for feedback is one of 5-8;

or, when the number of bits of a CSI request is 2 and an aperiodic report of one cell is triggered, the maximum number of physical resource blocks for feedback is one of 5-8;

or, when the number of bits of a CSI request is 2 and aperiodic report of multiple cells is triggered, the maximum number of physical resource blocks used for feedback by the UE is one of 25-40;

or, when the number of bits of a CSI request is 2 and an aperiodic report of multiple CSI is triggered, the maximum number of physical resource blocks used for feedback by the UE is one of 25-40.

An embodiment of the present disclosure provides a method for configuring uplink control information, which shall be described from a base station side. UE is configured to use an aperiodic feedback mode 3-2.

Fig. 6 is a flowchart of the method for configuring uplink control information of the embodiment of the present disclosure. As shown in Fig. 6, the method for configuring uplink control information includes:

> step 601: a maximum number of physical resource blocks for feedback configured by a base station for the UE is one of 5-8, when the number of bits of a CSI request is 1 and an aperiodic report is triggered.

Fig. 7 is another flowchart of the method for configuring uplink control information of the embodiment of the present disclosure. As shown in Fig. 7, the method for configuring uplink control information includes:

> step 701: a maximum number of physical resource blocks for feedback configured by a base station for the UE is one of 5-8, when the number of bits of a CSI request is 2 and an aperiodic report of one cell is triggered.

Fig. 8 is still another flowchart of the method for configuring uplink control information of the embodiment of the present disclosure. As shown in Fig. 8, the method for configuring uplink control information includes:

> step 801: a maximum number of physical resource blocks for feedback configured by a base station for the UE is one of 25-40, when the number of bits of a CSI request is 2 and an aperiodic report of multiple cells is triggered.

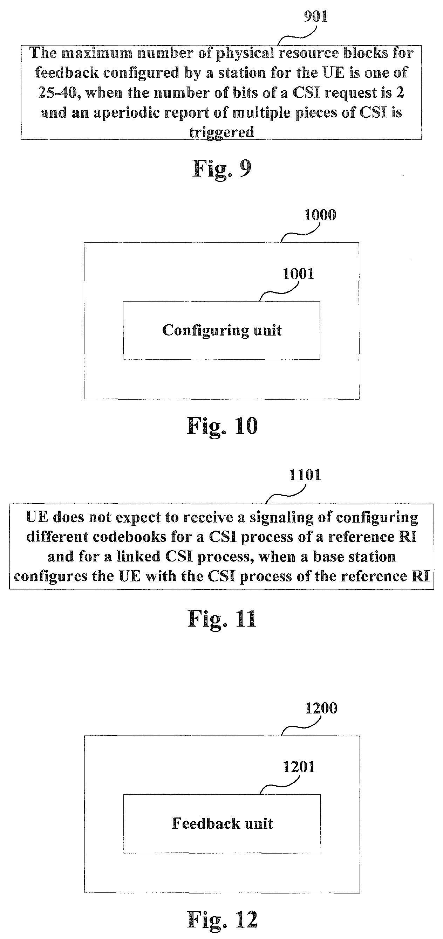

Fig. 9 is still another flowchart of the method for configuring uplink control information of the embodiment of the present disclosure. As shown in Fig. 9, the method for configuring uplink control information includes:

> step 901: a maximum number of physical resource blocks for feedback configured by a base station for the UE is one of 25-40, when the number of bits of a CSI request is 2 and an aperiodic report of multiple CSI is triggered.

An embodiment of the present disclosure further provides a base station. Fig. 10 is a schematic diagram of a structure of the base station of the embodiment of the present disclosure. As shown in Fig. 10, the base station 1000 includes a configuring unit 1001, and the relevant art may be referred to for other parts of the base station 1000.

The configuring unit 1001 is configured to configure resources in a case where UE uses an aperiodic feedback mode 3-2; when the number of bits of a CSI request is 1 and an aperiodic report is triggered, a maximum number of physical resource blocks for feedback configured for the UE is one of 5-8; or

when the number of bits of a CSI request is 2 and an aperiodic report of one cell is triggered, the maximum number of physical resource blocks for feedback configured for the UE is one of 5-8; or

when the number of bits of a CSI request is 2 and an aperiodic report of multiple cells is triggered, the maximum number of physical resource blocks for feedback configured for the UE is one of 25-40; or

when the number of bits of a CSI request is 2 and an aperiodic report of multiple CSI is triggered, the maximum number of physical resource blocks for feedback configured for the UE is one of 25-40.

It can be seen from the above embodiment that technical solutions of information feedback may further be optimized by enhancing information feedback under MIMO.

Embodiment 2

An embodiment of the present disclosure provides a method for feeding back information, which shall be described from a UE side. Fig. 11 is a flowchart of the method for feeding back information of the embodiment of the present disclosure. As shown in Fig. 11, the method for feeding back information includes:

> step 1101: UE does not expect to receive a signaling of configuring different codebooks for a CSI process of a reference RI and for a linked CSI process, when a base station configures the UE with the CSI process of the reference RI.

According to a conclusion of a current conference, the base station may independently configure codebooks used by a user according to each CSI process. When the base station needs to perform joint transmission according to feedback information of multiple CSI processes, it configures the user with an RI reference process. Implementation at the base station end is simplified by configuring the RI reference process. If different CSI processes are configured with different codebooks, additional test complexity will be brought about. And an effect of two independently designed codebooks on the system performance in the joint transmission is uncertain.

Hence, in this embodiment, actions of a user are defined: in configuring a reference RI process, the UE does not expect that the base station configures the CSI process of the reference RI and the linked CSI process with different codebooks. That is, the UE uses the codebooks configured by the base station for the CSI process of the reference RI which is identical to the codebooks of the linked CSI process for feedback, or, in other words, the base station configures the codebooks of the linked CSI process according to the codebooks of the CSI process of the reference RI.

An embodiment of the present disclosure further provides UE. Fig. 12 is a schematic diagram of a structure of the UE of the embodiment of the present disclosure. As shown in Fig. 12, the UE 1200 includes a feedback unit 1201, and the relevant art may be referred to for other parts of the UE 1200.

The feedback unit 1201 is configured to not expect to receive a signaling of configuring different codebooks for a CSI process of reference RI and for a linked CSI process, when a base station configures the UE with the CSI process of the reference RI.

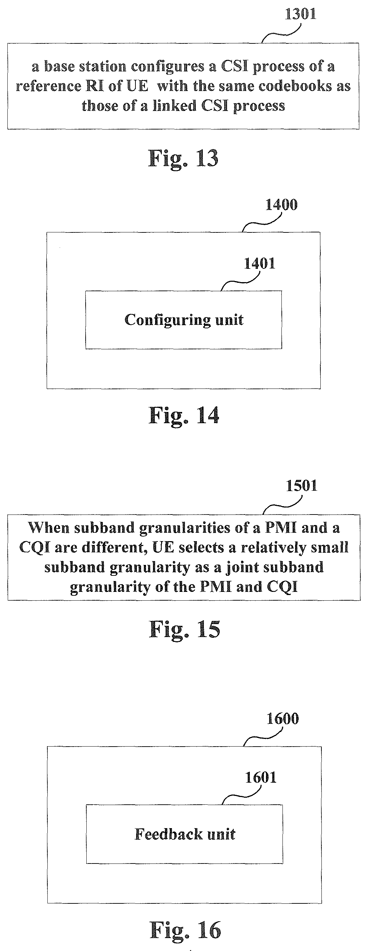

An embodiment of the present disclosure further provides a method for configuring information, which shall be described from a base station side. Fig. 13 is a flowchart of the method for configuring information of the embodiment of the present disclosure. As shown in Fig. 13, the method for configuring information includes:

> step 1301: a base station configures a CSI process of a reference RI of UE with the same codebooks as those of a linked CSI process.

An embodiment of the present disclosure further provides a base station. Fig. 14 is a schematic diagram of a structure of the base station of the embodiment of the present disclosure. As shown in Fig. 14, the base station 1400 includes a configuring unit 1401, and the relevant art may be referred to for other parts of the base station 1400.

The configuring unit 1401 is configured to configure a CSI process of reference RI of UE with the same codebooks as those of a linked CSI process.

It can be seen from the above embodiment that technical solutions of information feedback may further be optimized by enhancing information feedback under MIMO.

Embodiment 3

An embodiment of the present disclosure provides a method for feeding back information, which shall be described from a UE side. The UE uses a periodic feedback mode 2-1 and uses dual codebooks.

Fig. 15 is a flowchart of the method for feeding back information of the embodiment of the present disclosure. As shown in Fig. 15, the method for feeding back information includes:

> step 1501: when subband granularities of a PMI and a CQI are different, UE selects a relatively small subband granularity as a joint subband granularity of the PMI and CQI.

In this embodiment, when the feedback granularities of the subband PMI and CQI are inconsistent, if new codebooks (i.e. dual codebooks) are used, the periodic feedback mode 2-1 may include feedback of the subband PMI and CQI and subband index. The PMI corresponds to the subband PMI W2, and the CQI corresponds to the subband CQI. If the subband granularities of the PMI and the CQI are different, the relatively small subband granularity should be selected as the joint subband granularity of the PMI/CQI.

In particular, when the subband granularity of the CQI is less than that of the PMI, subband index information of the CQI is added.

For example, the granularity of the CQI is one time finer than that of the PMI, then their forms of feedback should be: PMI/CQI/PMI subband index, CQI/CQI subband index 1, subband index 2. Hence, a new feedback type needs to be defined: CQI/CQI subband index 1, subband index 2; however, existing protocols support only CQI/CQI subband index 1.

That is, the subband PMI, the subband CQI and the subband index of the PMI may be fed back by one frame, and the subband CQI and the subband index of the CQI may be indicated by another frame.

An embodiment of the present disclosure further provides UE. Fig. 16 is a schematic diagram of a structure of the UE of the embodiment of the present disclosure. As shown in Fig. 16, the UE 1600 includes a feedback unit 1601, and the relevant art may be referred to for other parts of the UE 1600.

The feedback unit 1601 is configured to use a periodic feedback mode 2-1 and use dual codebooks for feedback; and when subband granularities of a PMI and a CQI are different, a relatively small subband granularity is selected as a joint subband granularity of the PMI and CQI.

It can be seen from the above embodiment that technical solutions of information feedback may further be optimized by enhancing information feedback under MIMO.

Embodiment 4

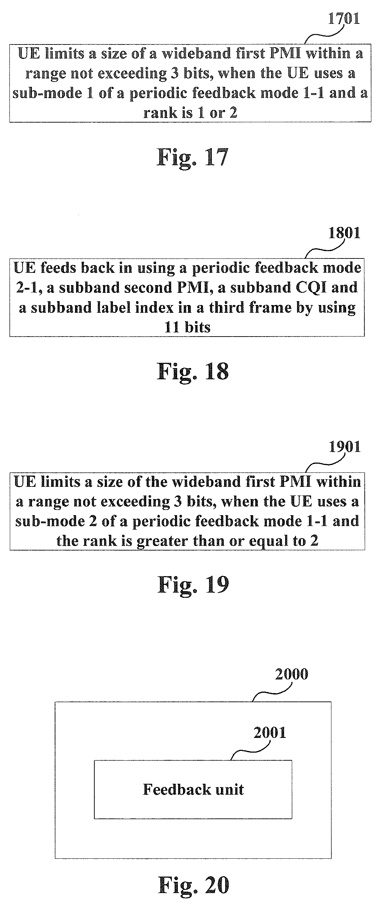

An embodiment of the present disclosure provides a method for feeding back information; UE uses dual codebooks. Fig. 17 is a flowchart of the method for feeding back information of the embodiment of the present disclosure. As shown in Fig. 17, the method for feeding back information includes:

step 1701: UE limits a size of a wideband first PMI within a range not exceeding 3 bits, when the UE uses a submode 1 of a periodic feedback mode 1-1 and a rank is 1 or 2.

In this embodiment, for the sub-mode 1 of the mode 1-1, the first frame is RI + wideband PMI W1, and the second frame is PMI W2 + wideband CQI. Certain problems occur when new codebooks (i.e. dual codebooks) are employed, as when a user supports RI<=2, there are two receiving antennas at the user end, and in order to ensure reliable receiving of RI, maximum supported feedback overhead is 4 bits; while when the user supports RI<=4, there are four receiving antennas at the user end, and in order to ensure reliable receiving of RI, maximum supported feedback overhead is 5 bits. Both cases require that feedback bits of the wideband W1 are 3 bits.

Currently, when the current rank is 1 or 2, the size of W1 is 16, that is, 4 bits are needed. Hence, a down selection technique needs to be adopted to satisfy a requirement on design. For a rank of 3 or 4, if new codebooks are employed, the size of W1 is 4; and if R8 codebooks are employed, the size of W1 is 1; thus, no problem of down selection will occur in these cases.

In particular, when the wideband first PMI exceeds 3 bits, the method may include: limiting the size of the wideband first PMI by reducing codewords with beam overlapping in the wideband first PMI or by lowering resolution of a discrete Fourier transform (DFT) vector of the wideband first PMI.

That is, down selection is performed on the rank of 1 or 2. For example, the down selection may be performed following a principle as below: reducing codewords with beam overlapping in W1, or lowering resolution of a DFT vector. For example, for $Q_1=16$, it may be down selected as a vector having only $Q_1=8$, and a down selected codeword is defined in the specification.

For example,

$$\mathbf{X}_n = \begin{bmatrix} 1 & 1 & 1 & 1 \\ e^{j\frac{2\pi\cdot(n\bmod 16)}{16}} & e^{j\frac{2\pi\cdot((n+1)\bmod 16)}{16}} & e^{j\frac{2\pi\cdot((n+2)\bmod 16)}{16}} & e^{j\frac{2\pi\cdot((n+3)\bmod 16)}{16}} \end{bmatrix} (n=1,\dots,16),$$

and beam overlapping may be ensured as being 2 by using a method of selecting a cardinal number of (n=1,3,...,15) of codewords; or $X_n = \begin{bmatrix} 1 & 1 \\ q^n & q^{n+1} \end{bmatrix}$ $q = e^{j\pi/8}$, lowering of DFT resolution may be adopted, with n being selected as an even number, thereby lowing a sampling rate to 8 from 16; or $\begin{bmatrix} 1 & 1 & 1 & 1 \\ e^{j\frac{2\pi n}{16}} & e^{j\frac{2\pi(n+1)}{16}} & e^{j\frac{2\pi(n+8)}{16}} & e^{j\frac{2\pi(n+9)}{16}} \end{bmatrix}$, a method of reducing beam repetition may be used, that is, n is selected as an odd number for sampling. It should be noted that the above example only illustrates the present disclosure; however, the present disclosure is not limited thereto.

In particular, when the wideband first PMI exceeds 3 bits, the method may further include: receiving, by the UE, information configured by a base station via high-layer signaling (such as RRC signaling); and selecting a set corresponding to the wideband first PMI from multiple predetermined sets; the number of elements in the set does not exceed 8 codewords. The multiple predetermined sets may be defined in the specification.

For example, in the specification, several 8-codeword sets may be defined according only to the design, and sets used for down selection may be configured by using, for example, RRC signaling. For example, a first codeword set is a codebook set used by large-spacing dual polarization antennas, and a second codeword set is a codebook set used by small-spacing dual polarization antennas; and then the RRC signaling down selects a used codebook set according to antenna configuration used by the system.

Fig. 18 is another flowchart of the method for feeding back information of the embodiment of the present disclosure. As shown in Fig. 18, the method for feeding back information includes:

step 1801: UE feeds back in using a periodic feedback mode 2-1, a subband second PMI, a subband CQI and a subband index in a third frame by using 11 bits.

In this embodiment, for the periodic feedback mode 2-1, the third frame feeds back the subband CQI/PMI2/subband index. When the rank is 1, there exists only one piece of CQI information, and the feedback overhead may be controlled to be within 11 bits; and when the rank is 2, if no compression is performed, the subband CQI1/2 are respectively 4+3 bits, the PMI W2 is 4 bits, and the subband index is 2 bits information, which exceed the 11 bits information bearable by the system; thus, bit compression needs to be performed.

In an implementation, when the rank is 2, a size of the CQI in the third frame is limited by differentially coding the wideband CQI and the subband CQI.

In particular, performing compression on the CQI is performing differential coding by using the wideband and subband CQI information, each piece of CQI needing only 2 bits information. A differential coding method in aperiodic feedback may be used as the differential coding method, such as illustrated in Table 3.

In another implementation, when the rank is 2, the size of the subband second PMI is limited to be not exceeding 2 bits.

That is, in performing compression on the PMI, the subband PMI W2 needs to be controlled within 2 bits. For the case where the rank is 1, as there exists only one piece of CQI information, no compression needs to be performed; and for the case where the rank is 2, compression needs to be performed on the subband PMI W2, by using two methods as follows.

In particular, a manner of combination of different antenna groups (polarization groups) is selected by using one bit, and a beam is selected by using the other bit.

For example, one bit is used to select one from codeword structures

$$\mathbf{W}_2 \in C_2 = \left\{ \frac{1}{2}\begin{bmatrix} \mathbf{Y}_1 & \mathbf{Y}_1 \\ \mathbf{Y}_2 & -\mathbf{Y}_2 \end{bmatrix}, \frac{1}{2}\begin{bmatrix} \mathbf{Y}_1 & \mathbf{Y}_1 \\ j\mathbf{Y}_2 & -j\mathbf{Y}_2 \end{bmatrix} \right\},$$ and the other bit is used to select a beam; where, Y1 and Y2 are

$e_i$, $e_i$ being selected from (1,1)(1,3), i.e. $\{e_1,e_1\}\{e_1,e_3\}$, or being selected from (1,1)(1,2), i.e. $\{e_1,e_1\}\{e_1,e_2\}$.

Or, in particular, the manner of combination of different polarization groups may be predetermined, and a beam is selected by 2 bits.

For example, the codeword structure may be determined as $\frac{1}{2}\begin{bmatrix} \mathbf{Y}_1 & \mathbf{Y}_1 \\ \mathbf{Y}_2 & -\mathbf{Y}_2 \end{bmatrix}$; then $e_i$ is selected from

(1,1),(3,3),(1,3),(3,1), i.e. $\{e_1,e_1\}\{e_3,e_3\}\{e_1,e_3\}\{e_3,e_1\}$.

For a case where the rank is 3 or 4, it is assumed that no enhanced codeword is used, and a DFT codebook, i.e. the first 4 or last 4 codewords in the R8 codebook, may be used. If a new codeword design is used (that is, dual codebooks are used), a similar design idea may also be used. That is, one bit is used to select a codeword structure (i.e. a manner of combination of different polarization groups), and the other bit is used to select a beam.

For example,

$$\mathbf{W}_2 \in C_2 = \left\{ \frac{1}{\sqrt{2}}\begin{bmatrix} \mathbf{Y}_1 & \mathbf{Y}_2 \\ \mathbf{Y}_1 & -\mathbf{Y}_2 \end{bmatrix}, \frac{1}{\sqrt{2}}\begin{bmatrix} \mathbf{Y}_1 & \mathbf{Y}_2 \\ j\mathbf{Y}_1 & -j\mathbf{Y}_2 \end{bmatrix} \right\}$$

$$(\mathbf{Y}_1, \mathbf{Y}_2) \in \left\{ \begin{array}{l} ([e_1,e_5],e_5), ([e_2,e_6],e_6), ([e_3,e_7],e_7), ([e_4,e_8],e_8), \\ ([e_5,e_1],e_1), ([e_6,e_2],e_2), ([e_7,e_3],e_3), ([e_8,e_4],e_4) \end{array} \right\};$$

wherein, a first bit selects a codeword structure, and a second bit selects from $\{e_1,e_5,e_5\}$ and $\{e_5,e_1,e_1\}$. However, it should be noted that the present disclosure is not limited thereto, and a particular implementation may be determined according to an actual situation.

Fig. 19 is still another flowchart of the method for feeding back information of the embodiment of the present disclosure. As shown in Fig. 19, the method for feeding back information includes:

step 1901: UE limits a size of the wideband first PMI within a range not exceeding 3 bits, when the UE uses a sub-mode 2 of a periodic feedback mode 1-1 and the rank is greater than or equal to 2.

In this embodiment, for the sub-mode 2 of the mode 1-1, the first frame feeds back the RI information, and the second frame feeds back wideband PMI W1 + wideband PMI W2 + wideband CQI information. When rank=1, 1-bit sub-sampling needs to be performed on the wideband PMI W1 or the wideband PMI W2; and when rank>=2, the number of bits of W1 + W2 needs to be controlled to be 4 bits. A method, in which 4 bits are sub-sampled to 3 bits by using W1 and W2 is sub-sampled to 1 bit when rank>=2, may be used.

In particular, W1 may follow the sub-sampling method in the sub-mode 1. That is, when the wideband first PMI exceeds 3 bits, the size of the wideband first PMI is limited by reducing codewords with beam overlapping in the wideband first PMI, or by lowering resolution of a discrete Fourier transform vector of the wideband first PMI.

Or, when the wideband first PMI exceeds 3 bits, the UE selects a set corresponding to the wideband first PMI according to information configured by the base station via high-layer signaling, the set not exceeding 8 codewords.

While when the rank is 2, the W2 may select a manner of combining different polarization groups by using one bit. A codeword structure of

$$\mathbf{W}_2 \in C_2 = \left\{ \frac{1}{2} \begin{bmatrix} \mathbf{Y}_1 & \mathbf{Y}_1 \\ \mathbf{Y}_2 & -\mathbf{Y}_2 \end{bmatrix}, \frac{1}{2} \begin{bmatrix} \mathbf{Y}_1 & \mathbf{Y}_1 \\ j\mathbf{Y}_2 & -j\mathbf{Y}_2 \end{bmatrix} \right\}$$

may only be selected; wherein both Y1 and Y2 select el. However, the present disclosure is not limited thereto.

When the rank is 3, 4, if an R8 codebook is used, W1=0, and W2 and the wideband CQI need not to be down sampled. If dual codebooks are used, the size of the wideband first PMI is 2 bits, and the size of the wideband second PMI is limited within 2 bits, for example, the above mode 2-1 may be followed; that is, the size of the wideband second PMI may be limited within 2 bits. For example, a manner of combining different polarization groups may be selected by using one bit, and a beam may be selected by using the other bit.

Or when the rank is 3, 4 and dual codebooks are used, the size of the wideband first PMI is 1 bit, and the size of the wideband second PMI is limited to be not exceeding 3 bits. In particular, the size of the wideband first PMI is limited to be 1 bit from 2 bits by reducing beam overlapping or by reducing beam spacing between different codewords.

For example, W1 uses two codewords down selected from 4 codewords. For example,

$$\mathbf{X}_n = \begin{bmatrix} 1 & 1 & & 1 \\ e^{j\frac{2\pi(4n)}{8}} & e^{j\frac{2\pi(4n+1)}{8}} & \cdots & e^{j\frac{2\pi(4n+7)}{8}} \end{bmatrix}, \text{ and a method of reducing beam spacing may be used, such as down selecting from}$$

n=0,1,2,3 to n=0,2, thereby making spacing between first beams of different codewords to be enlarged by using a method of down selection.

Furthermore, for the wideband second PMI, when the rank is 4, W2 is 3 bits, and down selection is not needed; and when the rank is 3, W2 is 4 bits, and down selection is needed, which may be carried out by using the method of down selecting beam combinations.

For example,

$$\mathbf{W}_2 = \begin{bmatrix} \mathbf{a}_1, & \mathbf{a}_2, & \mathbf{a}_3 \end{bmatrix} \in C_2 = \left\{ \frac{1}{2\sqrt{3}} \begin{bmatrix} \mathbf{y}_1 & \mathbf{y}_3 \\ \mathbf{y}_2 & -\mathbf{y}_4 \end{bmatrix} \right\}$$

$$\left\{ \begin{bmatrix} [\tilde{e}_1] & [\tilde{e}_1 & \tilde{e}_3] \\ [\tilde{e}_1] & [\tilde{e}_1 & \tilde{e}_3] \end{bmatrix}, \begin{bmatrix} [\tilde{e}_2] & [\tilde{e}_2 & \tilde{e}_4] \\ [\tilde{e}_2] & [\tilde{e}_2 & \tilde{e}_4] \end{bmatrix}, \begin{bmatrix} [\tilde{e}_3] & [\tilde{e}_1 & \tilde{e}_3] \\ [\tilde{e}_3] & [\tilde{e}_1 & \tilde{e}_3] \end{bmatrix}, \begin{bmatrix} [\tilde{e}_4] & [\tilde{e}_2 & \tilde{e}_4] \\ [\tilde{e}_4] & [\tilde{e}_2 & \tilde{e}_4] \end{bmatrix}, \right.$$
$$\begin{bmatrix} [\tilde{e}_1 & \tilde{e}_3] & [\tilde{e}_3] \\ [\tilde{e}_1 & \tilde{e}_3] & [\tilde{e}_3] \end{bmatrix}, \begin{bmatrix} [\tilde{e}_2 & \tilde{e}_4] & [\tilde{e}_4] \\ [\tilde{e}_2 & \tilde{e}_4] & [\tilde{e}_4] \end{bmatrix}, \begin{bmatrix} [\tilde{e}_3 & \tilde{e}_1] & [\tilde{e}_1] \\ [\tilde{e}_3 & \tilde{e}_1] & [\tilde{e}_1] \end{bmatrix}, \begin{bmatrix} [\tilde{e}_4 & \tilde{e}_2] & [\tilde{e}_2] \\ [\tilde{e}_4 & \tilde{e}_2] & [\tilde{e}_2] \end{bmatrix}.$$
$$\begin{bmatrix} [\tilde{e}_1] & [\tilde{e}_1 & \tilde{e}_3] \\ [\tilde{e}_3] & [\tilde{e}_3 & \tilde{e}_1] \end{bmatrix}, \begin{bmatrix} [\tilde{e}_2] & [\tilde{e}_2 & \tilde{e}_4] \\ [\tilde{e}_4] & [\tilde{e}_4 & \tilde{e}_2] \end{bmatrix}, \begin{bmatrix} [\tilde{e}_3] & [\tilde{e}_1 & \tilde{e}_3] \\ [\tilde{e}_1] & [\tilde{e}_3 & \tilde{e}_1] \end{bmatrix}, \begin{bmatrix} [\tilde{e}_4] & [\tilde{e}_2 & \tilde{e}_4] \\ [\tilde{e}_2] & [\tilde{e}_4 & \tilde{e}_2] \end{bmatrix},$$
$$\left. \begin{bmatrix} [\tilde{e}_1 & \tilde{e}_3] & [\tilde{e}_3] \\ [\tilde{e}_3 & \tilde{e}_1] & [\tilde{e}_1] \end{bmatrix}, \begin{bmatrix} [\tilde{e}_2 & \tilde{e}_4] & [\tilde{e}_4] \\ [\tilde{e}_4 & \tilde{e}_2] & [\tilde{e}_2] \end{bmatrix}, \begin{bmatrix} [\tilde{e}_3 & \tilde{e}_1] & [\tilde{e}_1] \\ [\tilde{e}_1 & \tilde{e}_3] & [\tilde{e}_3] \end{bmatrix}, \begin{bmatrix} [\tilde{e}_4 & \tilde{e}_2] & [\tilde{e}_2] \\ [\tilde{e}_2 & \tilde{e}_4] & [\tilde{e}_4] \end{bmatrix} \right\}.$$

The beams are down selected as the first and third columns of the beams therein, that is, the following 8 codewords:

$$\begin{bmatrix} [e_1] & [e_1 & e_3] \\ [e_1] & [e_1 & e_3] \end{bmatrix}, \begin{bmatrix} [e_3] & [e_1 & e_3] \\ [e_3] & [e_1 & e_3] \end{bmatrix}, \begin{bmatrix} [e_1 & e_3] & [e_3] \\ [e_1 & e_3] & [e_3] \end{bmatrix}, \begin{bmatrix} [e_3 & e_1] & [e_1] \\ [e_3 & e_1] & [e_1] \end{bmatrix}, \begin{bmatrix} [e_1] & [e_1 & e_3] \\ [e_3] & [e_3 & e_1] \end{bmatrix},$$

$$\begin{bmatrix} [e_3] & [e_1 & e_3] \\ [e_1] & [e_3 & e_1] \end{bmatrix}, \begin{bmatrix} [e_1 & e_3] & [e_3] \\ [e_3 & e_1] & [e_1] \end{bmatrix}, \begin{bmatrix} [e_3 & e_1] & [e_1] \\ [e_1 & e_3] & [e_3] \end{bmatrix}.$$

An embodiment of the present disclosure further provides UE. Fig. 20 is a schematic diagram of a structure of the UE of the embodiment of the present disclosure. As shown in Fig. 20, the UE 2000 includes a feedback unit 2001, and the relevant art may be referred to for other parts of the UE 2000.

The feedback unit 2001 is configured to use a sub-mode 1 of a periodic feedback mode 1-1 for feedback; and when a rank is 1 or 2, a size of a wideband first PMI is limited within a range not exceeding 3 bits.

Or the feedback unit 2001 is further configured to use a periodic feedback mode 2-1 for feedback; a subband second PMI, a subband CQI and a subband index in a third frame are fed back by using 11 bits.

Or the feedback unit 2001 is further configured to use a sub-mode 2 of a periodic feedback mode 1-1 for feedback; a size of a wideband first PMI is limited within a range not exceeding 3 bits.

It can be seen from the above embodiment that technical solutions of information feedback may further be optimized by enhancing information feedback under MIMO.

Embodiment 5

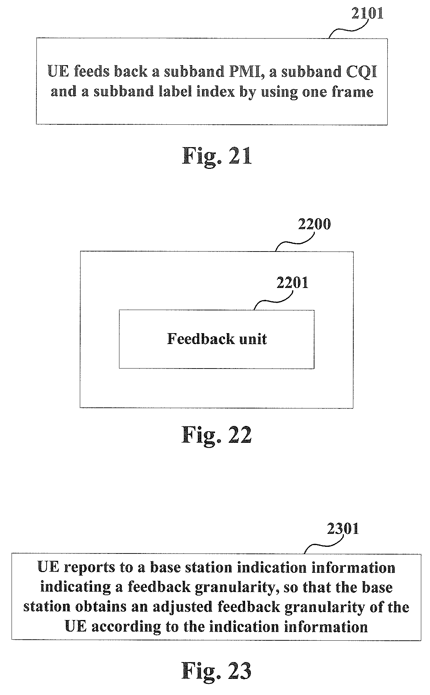

An embodiment of the present disclosure provides a method for feeding back information. Fig. 21 is a flowchart of the method for feeding back information of the embodiment of the present disclosure. As shown in Fig. 21, the method for feeding back information includes:

step 2101: UE feeds back a subband PMI, a subband CQI and a subband index by using one frame.

Furthermore, the UE may use another frame to feed back RI, and use still another frame to feed back a wideband PMI and a wideband CQI.

For example, the UE uses a first frame to feed back the RI, use a second frame to feed back the wideband PMI and the wideband CQI, and use a third frame to feed back the subband PMI, the subband CQI and the subband index.

Currently, the R8 codebook is used, which supports only the subband CQI feedback, and does not support the subband CQI/subband PMI feedback. For the transmission modes 4, 6, the aperiodic feedback mode 3-2 has supported the subband CQI/subband PMI. And for the transmission modes 8/9/10, feedback of subband PMI and CQI may also be supported via a feedback type la.

In this embodiment, in order to ensure the identical feedback granularities of the dual codebooks and the R8 codebook, a function of feeding back the subband CQI/subband PMI of the R8 codebook need to be added. The RI is fed back at a first frame, the wideband PMI/CQI is fed back at a second frame, and the subband PMI/CQI and subband index are fed back at a third frame. A feedback content of the third frame is a feedback type 1b needing to be added. In order to ensure feedback overhead of 11 bits, feedback information t of the third frame needs to be compressed.

In an implementation, the CQI may be compressed. In particular, the size of the CQI in the third frame may be limited by differentially coding the wideband CQI and the subband CQI.

For example, the wideband and subband CQI information is used for differential coding, each piece of CQI needing only 2 bits information; the method of differential coding in the aperiodic feedback may be used as the method of differential coding, such as that shown in Table 3.

In another implementation, the PMI may be compressed. In particular, the size of the subband PMI in the third frame may be limited to be not exceeding 2 bits, that is, only the first 4 codewords or the last 4 codewords in the R8 codebook are applicable.

An embodiment of the present disclosure further provides UE. Fig. 22 is a schematic diagram of a structure of the UE of the embodiment of the present disclosure. As shown in Fig. 22, the UE 2200 includes a feedback unit 2201, and the relevant art may be referred to for other parts of the UE 2200.

The feedback unit 2201 is configured to use a first frame to feed back RI, use a second frame to feed back a wideband PMI and a wideband CQI, and use a third frame to feed back a subband PMI, a subband CQI and a subband index.

It can be seen from the above embodiment that technical solutions of information feedback may further be optimized by enhancing information feedback under MIMO.

Embodiment 6

An embodiment of the present disclosure provides a method for feeding back information. Fig. 23 is a flowchart of the method for feeding back information of the embodiment of the present disclosure. As shown in Fig. 23, the method for feeding back information includes:

step 2301: UE reports to a base station indication information indicating a feedback granularity, so that the base station obtains an adjusted feedback granularity of the UE according to the indication information.

For the MU-MIMO transmission, increasing feedback precision is advantageous to improving system performance. Increasing a feedback granularity is an efficient way of increasing feedback precision. The existing methods increase feedback precision in a semi-static configuration manner. While in an actual system, the base station has no exact dynamic interference information and uplink payload information, and an instantaneous correlation between channels instantaneously varies along with the time, all these requiring the user end to instantaneously adjust a feedback granularity according to actual situations of interference and payload.

In an implementation, the indication information is 1 bit, such as a new granularity indicator (NGI) bit, and the method further includes: jointly coding RI and the indication information by the UE.

The NGI supports a PRB granularity used in this time. For example, "0" denotes a PRB granularity in the specification, and "1" denotes a finer PRB feedback granularity; or, for example, "0" denotes a legacy codebook in the specification, and "1" denotes a codebook of a finer spatial granularity. They are applicable to periodic and aperiodic feedback modes.

In another implementation, the UE may add the indication information to the aperiodic feedback, so as to indicate a subband used for adding a feedback granularity. The indication information is $\log_2 C_K^N$, and N subbands are selected from K subbands for feedback.

That is, N subbands are selected from K subbands for feedback to which high resolution subbands are applicable, and subband resolution defined in the R10 specification are still applicable to other subbands for feedback. Signaling overhead needed by it is log2(<N,K>).

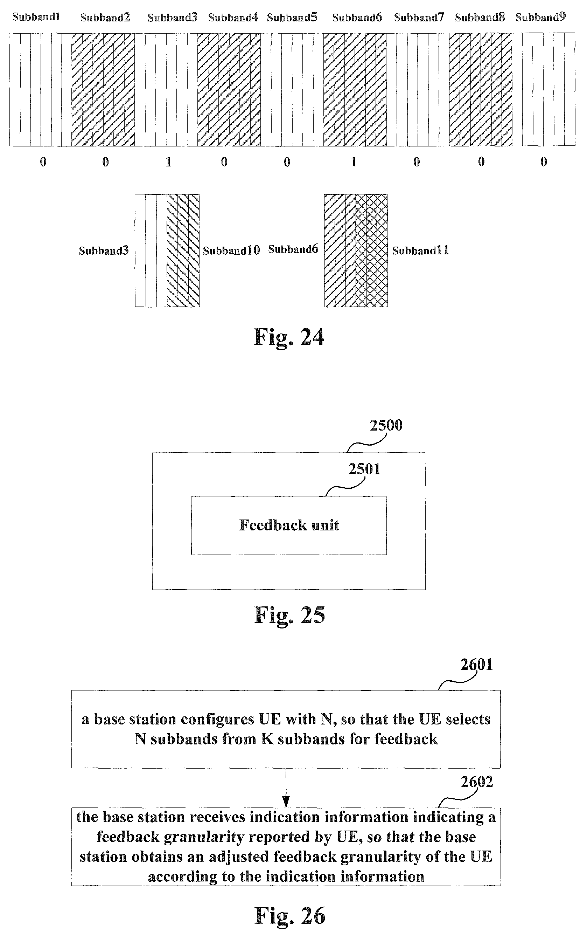

Fig. 24 is a schematic diagram of changing feedback precision of an embodiment of the present disclosure. As shown in Fig. 24, for example, 2 subbands are selected from 9 subbands for feedback of high precision, and other 7 subbands still use the precision defined in the R10 specification for feedback.

An embodiment of the present disclosure further provides UE. Fig. 25 is a schematic diagram of a structure of the UE of the embodiment of the present disclosure. As shown in Fig. 25, the UE 2500 includes a feedback unit 2501, and the relevant art may be referred to for other parts of the UE 2500.

The feedback unit 2501 is configured to report indication information indicating a feedback granularity to a base station, so that the base station obtains an adjusted feedback granularity of the UE according to the indication information.

An embodiment of the present disclosure further provides a method for configuring information, which shall be described from a base station side. Fig. 26 is a flowchart of the method for configuring information of the embodiment of the present disclosure. As shown in Fig. 26, the method includes:

> step 2601: a base station configures UE with N, so that the UE selects N subbands from K subbands for feedback; and
> step 2602: the base station receives indication information indicating a feedback granularity reported by UE, so that the base station obtains an adjusted feedback granularity of the UE according to the indication information.

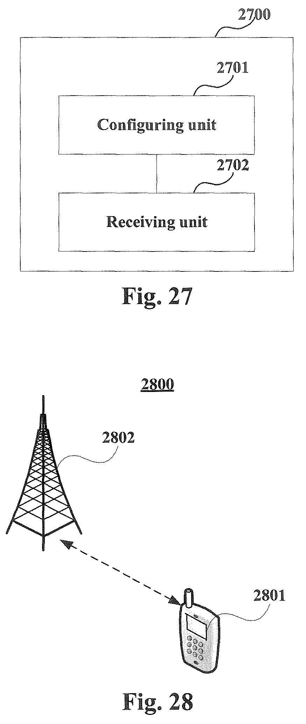

An embodiment of the present disclosure further provides a base station. Fig. 27 is a schematic diagram of a structure of the base station of the embodiment of the present disclosure. As shown in Fig. 27, the base station 2700 includes a configuring unit 2701 and a receiving unit 2701, and the relevant art may be referred to for other parts of the base station 2700.

The configuring unit 2701 is configured to configure UE with N, so that the UE selects N subbands from K subbands for feedback; and the receiving unit 2701 is configured to receive indication information indicating a feedback granularity reported by the UE, so that the base station obtains an adjusted feedback granularity of the UE according to the indication information.

It can be seen from the above embodiment that technical solutions of information feedback may further be optimized by enhancing information feedback under MIMO.

An embodiment of the present disclosure provides a communication system, including the UE and the base station as described in the above embodiments.

Fig. 28 is a schematic diagram of a structure of the communication system of the embodiment of the present disclosure. As shown in Fig. 28, the communication system includes UE 2801 and a base station 2802, the UE 2801 feeding back information to the base station 2802.

An embodiment of the present disclosure further provides a computer-readable program, wherein when the program is executed in UE, the program enables a computer to carry out the method for feeding back information as described above in the UE.

An embodiment of the present disclosure further provides a storage medium in which a computer-readable program is stored, wherein the computer-readable program enables a computer to carry out the method for feeding back information as described above in UE.

An embodiment of the present disclosure further provides a computer-readable program, wherein when the program is executed in a base station, the program enables a computer to carry out the method for configuring information as described above in the base station.

An embodiment of the present disclosure further provides a storage medium in which a computer-readable program is stored, wherein the computer-readable program enables a computer to carry out the method for configuring information as described above in a base station.

The above apparatuses and methods of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory, etc.

One or more functional blocks and/or one or more combinations of the functional blocks in Figures may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof. And they may also be realized as a combination of computing equipment, such as a combination of a DSP and a microprocessor, multiple processors, one or more microprocessors in communication combination with a DSP, or any other such configuration.

The present disclosure is described above with reference to particular embodiments. However, it should be understood by those skilled in the art that such a description is illustrative only, and not intended to limit the protection scope of the present disclosure. Various variants and modifications may be made by those skilled in the art according to the principles of the present disclosure, and such variants and modifications fall within the scope of the present disclosure.

**Claims**

1. A method for transmitting uplink control information, wherein UE is configured to support an aperiodic feedback mode 3-2, and the method comprises:

   when the number of bits of a channel state information (CSI) request is 1 and an aperiodic report is triggered, a maximum number of physical resource blocks used for feedback by the UE is one of 5-8; or
   when the number of bits of a CSI request is 2 and an aperiodic report of one cell is triggered, the maximum number of physical resource blocks used for feedback by the UE is one of 5-8.

2. The method according to claim 1, wherein the method further comprises:

   when the number of bits of a CSI request is 2 and an aperiodic report of multiple cells is triggered, the maximum number of physical resource blocks used for feedback by the UE is one of 25-40; or
   when the number of bits of a CSI request is 2 and an aperiodic report of multiple CSI is triggered, the maximum number of physical resource blocks used for feedback by the UE is one of 25-40.

3. The method according to claim 1 or 2, wherein the method further comprises:

   calculating the maximum number of the physical resource blocks for feedback according to a size of a subband second PMI or the number of subbands.

4. The method according to claim 1 or 2, wherein the maximum number of the physical resource blocks for feedback is less than or equal to the number of physical resource blocks of uplink resources configured by a base station for the UE.

5. The method according to claim 1, wherein the maximum number of the physical resource blocks for feedback when the number of bits of the CSI request is 1 and the aperiodic report is triggered is identical to the maximum number of the physical resource blocks for feedback when the number of bits of the CSI request is 2 and the aperiodic report of one cell is triggered; and the maximum number of physical resource blocks used for feedback by the UE is 5 or 6.

6. The method according to claim 2, wherein the maximum number of the physical resource blocks for feedback when the number of bits of the CSI request is 2 and the aperiodic report of multiple cells is triggered is identical to the maximum number of the physical resource blocks for feedback when the number of bits of the CSI request is 2 and the aperiodic report of multiple CSI is triggered; and the maximum number of physical resource blocks used for feedback by the UE is one of 25 and 30-32.

7.  The method according to claim 3, wherein maximum feedback overhead of the aperiodic feedback mode 3-2 is 8N+12, N being the number of the subbands.

8.  A method for feeding back information, comprising:

    feeding back aperiodically, by UE, a wideband CQI, a subband CQI, a wideband first PMI and a subband second PMI.

9.  The method according to claim 8, wherein when the UE is configured with a transmission mode 9 or 10 and dual codebooks are used,
    for feedback of 4 antenna ports, the subband second PMI is $K_1 N_2$ bits when the rank is 1 or 2, $K_2 N_2$ bits when the rank is 3, and $K_3 N_2$ bits when the rank is 4;
    wherein $K_1$, $K_2$ and $K_3$ are constants decided by a size of the second precoding codebook in the dual codebooks, and $N_2$ is the number of subbands of the PMI.

10. The method according to claim 8, wherein when the UE is configured with a transmission mode 8, 9 or 10,
    for feedback of 8 antenna ports, a subband differential CQI codeword 0 is $2N_1$ bits when the rank is 1-8, a subband differential CQI codeword 1 is $2N_1$ bits when the rank is 2-8, the subband second PMI is $4N_2$ bits when the rank is 1-3, and $3N_2$ bits when the rank is 4;
    wherein $N_1$ is the number of subbands of the CQI, and $N_2$ is the number of subbands of the PMI.

11. The method according to claim 8, wherein the aperiodic feedback comprises:

    a first wideband CQI, a first subband differential CQI, a second wideband CQI, a second subband differential CQI, a wideband first PMI and a subband second PMI;
    wherein the subband second PMI is arranged in an ascending order of subband labels.

12. A method for configuring uplink control information, wherein UE is configured to support an aperiodic feedback mode 3-2, and the method comprises:

    a maximum number of physical resource blocks for feedback configured by a base station for the UE is one of 5-8, when the number of bits of a CSI request is 1 and an aperiodic report is triggered; or
    the maximum number of physical resource blocks for feedback configured by the base station for the UE is one of 5-8, when the number of bits of a CSI request is 2 and an aperiodic report of one cell is triggered.

13. The method according to claim 12, wherein the method further comprises:

    the maximum number of physical resource blocks for feedback configured by the base station for the UE is one of 25-40, when the number of bits of a CSI request is 2 and an aperiodic report of multiple cells is triggered; or
    the maximum number of physical resource blocks for feedback configured by the base station for the UE is one of 25-40, when the number of bits of a CSI request is 2 and an aperiodic report of multiple CSI is triggered.

14. A method for feeding back information, comprising:

    not expecting, by UE, to receive a signaling of configuring different codebooks for a CSI process of a reference RI and for a linked CSI process, when a base station configures the UE with the CSI process of the reference RI.

15. A method for configuring information, comprising:

    configuring, by a base station, a CSI process of a reference RI of UE with the same codebooks as those of a linked CSI process.

16. A method for feeding back information, wherein UE is configured to support an periodic feedback mode 2-1 and dual codebooks are used, and the method comprises:

    when subband granularities of a PMI and a CQI are different, selecting a relatively small subband granularity by the UE as a joint subband granularity of the PMI and CQI.

**17.** The method according to claim 16, wherein the contents fed back by the UE comprise a subband index of the PMI and a subband index of the CQI.

**18.** The method according to claim 16, wherein when the subband granularity of the CQI is smaller than that of the PMI, the method further comprises:

feeding back the subband PMI, the subband CQI and a subband index of the PMI by using one frame, and indicating the subband CQI and a subband index of the CQI by using another frame.

**19.** A method for feeding back information, wherein UE is configured to use dual codebooks, and the method comprises:

limiting, by the UE, a size of a wideband first PMI within a range not exceeding 3 bits, when the UE uses a sub-mode 1 of a periodic feedback mode 1-1 and the rank is 1 or 2.

**20.** The method according to claim 19, wherein when the wideband first PMI exceeds 3 bits, the method comprises:

limiting the size of the wideband first PMI by reducing codewords with beam overlapping in the wideband first PMI.

**21.** The method according to claim 20, wherein codewords with n being odd numbers, or codewords with n being even numbers, are selected from beam coefficients $(a_{CR}, n)$ of the wideband first PMI for determining beam directions, where, n=1,......, 16.

**22.** The method according to claim 19, wherein when the wideband first PMI exceeds 3 bits, the method comprises:

limiting the size of the wideband first PMI by reducing precision of a discrete Fourier transform vector of the wideband first PMI.

**23.** The method according to claim 22, wherein the beam granularity of the wideband first PMI is selected as Q1=8 beam from Q1=16.

**24.** The method according to claim 19, wherein when the wideband first PMI exceeds 3 bits, the method comprises:

receiving, by the UE, information configured by a base station via a high-layer signaling; and
selecting a set corresponding to the wideband first PMI from multiple predetermined sets, the set not exceeding 8 codewords.

**25.** A method for feeding back information, comprising:

feeding back, by UE in using a periodic feedback mode 2-1, a subband second PMI, a subband CQI and a subband index in a third frame by using 11 bits.

**26.** The method according to claim 25, wherein when the rank is 2, a size of a CQI in the third frame is limited by differentially coding a wideband CQI and a subband CQI.

**27.** The method according to claim 26, wherein a first wideband CQI and a first subband CQI are differentially coded to obtain a differentiated first subband CQI, and a second wideband CQI and a second subband CQI are differentially coded to obtain a differentiated second subband CQI; and
in a mapping table of differential coding, if an offset value is 0, a differential CQI value is 0; if an offset value is 1, a differential CQI value is 1; if an offset value is greater than or equal to 2, a differential CQI value is 2; and if an offset value is less than or equal to -1, a differential CQI value is 3.

**28.** The method according to claim 25, wherein the size of the subband second PMI is limited within a range not exceeding 2 bits, when the rank is 2 or when dual codebooks are used and the rank is 3 or 4.

**29.** The method according to claim 28, wherein a manner of combining different antenna groups is selected by using one bit, and a beam is selected by using the other bit.

**30.** The method according to claim 29, wherein,

the manner of combining antenna groups is selected from

$$\left\{ \frac{1}{2}\begin{bmatrix} \mathbf{Y}_1 & \mathbf{Y}_1 \\ \mathbf{Y}_2 & -\mathbf{Y}_2 \end{bmatrix}, \frac{1}{2}\begin{bmatrix} \mathbf{Y}_1 & \mathbf{Y}_1 \\ j\mathbf{Y}_2 & -j\mathbf{Y}_2 \end{bmatrix} \right\},$$

and the beam is selected from $\{(e_1, e_1),(e_1, e_3)\}$, or from $\{(e_1, e_1),(e_1, e_2)\}$.

31. The method according to claim 28, wherein the manner of combining different antenna groups is predetermined, and the beam is selected by using 2 bits.

32. The method according to claim 31, wherein,

the manner of combining antenna groups is determined as $\frac{1}{2}\begin{bmatrix} \mathbf{Y}_1 & \mathbf{Y}_1 \\ \mathbf{Y}_2 & -\mathbf{Y}_2 \end{bmatrix}$, and the beam is selected from $\{(e_1, e_1), (e_3, e_3), (e_1, e_3), (e_3, e_1)\}$.

33. The method according to claim 25, wherein when a single codeword codebook is used and the rank is 3 or 4, the subband second PMI uses former 4 codewords or last 4 codewords in the single codeword codebook.

34. A method for feeding back information, wherein UE is configured to use dual codebooks, and the method comprises:

limiting, by the UE, a size of a wideband first PMI within a range not exceeding 3 bits, when the UE uses a sub-mode 2 of a periodic feedback mode 1-1.

35. The method according to claim 34, wherein when the rank is 1 or 2 and the wideband first PMI exceeds 3 bits, the method comprises:

limiting the size of the wideband first PMI by reducing codewords with beam overlapping in the wideband first PMI.

36. The method according to claim 35, wherein codewords with n being odd numbers, or codewords with n being even numbers, are selected from beam coefficients (aCR, n) of the wideband first PMI for determining beam directions, where, n=1,......, 16.

37. The method according to claim 34, wherein when the rank is 1 or 2 and the wideband first PMI exceeds 3 bits, the method comprises:

limiting the size of the wideband first PMI by reducing precision of a discrete Fourier transform vector of the wideband first PMI.

38. The method according to claim 37, wherein the beam granularity of the wideband first PMI is selected as Q1=8 beam from Q1=16.

39. The method according to claim 34, wherein when the rank is 1 or 2 and the wideband first PMI exceeds 3 bits, the method comprises:

receiving, by the UE, information configured by a base station via high-layer signaling; and
selecting a set corresponding to the wideband first PMI from multiple predetermined sets, the set not exceeding 8 codewords.

40. The method according to claim 34, wherein for a wideband second PMI, when the rank is 2, a manner of combining different antenna groups is selected by using one bit.

41. The method according to claim 34, wherein when the rank is 3 or 4 and the size of the wideband first PMI is 2 bits, the size of the wideband second PMI is limited within a range not exceeding 2 bits.

42. The method according to claim 34, wherein when the rank is 3 or 4 and the size of the wideband first PMI is 1 bit, the size of the wideband second PMI is limited within a range not exceeding 3 bits.

43. The method according to claim 42, wherein the size of the wideband first PMI is limited within a range of 1 bit from 2 bits by reducing beaming overlapping or reducing beam intervals between different codewords.

44. The method according to claim 42, wherein when the rank is 4, the size of the wideband second PMI is limited within a range of 3 bits from 4 bits by selecting a beam combination.

45. The method according to claim 44, wherein codewords selected for the wideband second PMI are:

$$\begin{bmatrix} [e_1] & [e_1 \ e_3] \\ [e_1] & [e_1 \ e_3] \end{bmatrix} \ , \ \begin{bmatrix} [e_3] & [e_1 \ e_3] \\ [e_3] & [e_1 \ e_3] \end{bmatrix} \ , \ \begin{bmatrix} [e_1 \ e_3] & [e_3] \\ [e_1 \ e_3] & [e_3] \end{bmatrix} \ , \ \begin{bmatrix} [e_3 \ e_1] & [e_1] \\ [e_3 \ e_1] & [e_1] \end{bmatrix} \ ,$$

$$\begin{bmatrix} [e_1] & [e_1 \ e_3] \\ [e_3] & [e_3 \ e_1] \end{bmatrix} , \begin{bmatrix} [e_3] & [e_1 \ e_3] \\ [e_1] & [e_3 \ e_1] \end{bmatrix} , \begin{bmatrix} [e_1 \ e_3] & [e_3] \\ [e_3 \ e_1] & [e_1] \end{bmatrix} , \begin{bmatrix} [e_3 \ e_1] & [e_1] \\ [e_1 \ e_3] & [e_3] \end{bmatrix} .$$

46. A method for feeding back information, comprising:

   feeding back, by UE, a subband PMI, a subband CQI and a subband index by using one frame.

47. The method according to claim 46, wherein the method further comprises:

   feeding back RI by using another frame; and
   feeding back a wideband PMI and a wideband CQI by using still another frame.

48. The method according to claim 46, wherein the UE uses a single codeword codebook for feedback.

49. The method according to claim 46, wherein a size of a CQI in a third frame is limited by differentially coding a wideband CQI and a subband CQI.

50. The method according to claim 49, wherein a first wideband CQI and a first subband CQI are differentially coded to obtain a differentiated first subband CQI, and second wideband CQI and a second subband CQI are differentially coded to obtain a differentiated second subband CQI; and
   in a mapping table of differential coding, if an offset value is 0, a differential CQI value is 0; if an offset value is 1, a differential CQI value is 1; if an offset value is greater than or equal to 2, a differential CQI value is 2; and if an offset value is less than or equal to -1, a differential CQI value is 3.

51. The method according to claim 46, wherein the size of the subband PMI in a third frame is limited within a range not exceeding 2 bits.

52. The method according to claim 51, wherein former 4 codewords or last 4 codewords in a single codeword codebook are used.

53. A method for feeding back information, comprising:

   reporting, by UE to a base station, indication information indicating a feedback granularity, so that the base station obtains an adjusted feedback granularity of the UE according to the indication information.

54. The method according to claim 53, wherein the method further comprises:

   jointly coding and transmitting, by the UE, RI and the indication information.

55. The method according to claim 53, wherein the UE adds the indication information into aperiodic feedback, so as to indicate subbands for increasing feedback granularity.

**56.** The method according to claim 55, wherein the indication information is $\log_2 C_K^N$, and N subbands are selected from K subbands for feedback.

**57.** A method for configuring information, comprising:

receiving, by a base station, indication information indicating a feedback granularity reported by UE, so that the base station obtains an adjusted feedback granularity of the UE according to the indication information.

**58.** The method according to claim 57, wherein the method further comprises:

configuring the UE by the base station with N, so that the UE selects N subbands from K subbands for feedback.

**59.** UE, comprising:

a feedback unit configured to feed back by using an aperiodic feedback mode 3-2; wherein when the number of bits of a CSI request is 1 and an aperiodic report is triggered, a maximum number of physical resource blocks for feedback is one of 5-8; or
when the number of bits of a CSI request is 2 and an aperiodic report of one cell is triggered, the maximum number of physical resource blocks for feedback is one of 5-8.

**60.** The UE according to claim 59, wherein the feedback unit is further configured as:

when the number of bits of a CSI request is 2 and an aperiodic report of multiple cells is triggered, the maximum number of physical resource blocks for feedback is one of 25-40; or
when the number of bits of a CSI request is 2 and an aperiodic report of multiple CSI is triggered, the maximum number of physical resource blocks for feedback is one of 25-40.

**61.** A base station, comprising:

a configuring unit configured to configure resources in a case where UE supports an aperiodic feedback mode 3-2; wherein when the number of bits of a CSI request is 1 and an aperiodic report is triggered, a maximum number of physical resource blocks for feedback configured for the UE is one of 5-8; or
when the number of bits of a CSI request is 2 and an aperiodic report of one cell is triggered, the maximum number of physical resource blocks for feedback configured for the UE is one of 5-8.

**62.** The base station according to claim 61, wherein the configuring unit is further configured to configure the maximum number of physical resource blocks for feedback configured for the UE as one of 25-40, when the number of bits of a CSI request is 2 and an aperiodic report of multiple cells is triggered; or
to configure the maximum number of physical resource blocks for feedback configured for the UE as one of 25-40, when the number of bits of a CSI request is 2 and an aperiodic report of multiple CSI is triggered.

**63.** UE, comprising:

a feedback unit configured to expect not to receive a signaling of configuring different codebooks for a CSI process of reference RI and for a linked CSI process, when a base station configures the UE with the CSI process of the reference RI.

**64.** Abase station, comprising:

a configuring unit configured to configure a CSI process of reference RI of UE with the same codebooks as those of a linked CSI process.

**65.** UE, comprising:

a feedback unit configured to use a periodic feedback mode 2-1 and use dual codebooks; wherein when subband granularities of a PMI and a CQI are different, a relatively small subband granularity is selected as a joint subband granularity of the PMI and CQI.

66. UE, comprising:

a feedback unit configured to use a sub-mode 1 of a periodic feedback mode 1-1 for feedback; wherein when a rank is 1 or 2, a size of a wideband first PMI is limited within a range not exceeding 3 bits.

67. UE, comprising:

a feedback unit configured to use a periodic feedback mode 2-1 for feedback; wherein a subband second PMI, a subband CQI and a subband index in a third frame are fed back by using 11 bits.

68. UE, comprising:

a feedback unit configured to limit a size of a wideband first PMI within a range not exceeding 3 bits when a sub-mode 2 of a periodic feedback mode 1-1 is used for feedback.

69. UE, comprising:

a feedback unit configured to use one frame to feed back a subband PMI, a subband CQI and a subband index.

70. UE, comprising:

a feedback unit configured to report indication information indicating a feedback granularity to a base station, so that the base station obtains an adjusted feedback granularity of the UE according to the indication information.

71. Abase station, comprising:

a receiving unit configured to receive indication information indicating a feedback granularity reported by UE, so that the base station obtains an adjusted feedback granularity of the UE according to the indication information.

72. The base station according to claim 71, wherein the base station further comprises:

a configuring unit configured to configure the UE with N, so that the UE selects N subbands from K subbands for feedback.

73. A communication system, comprising the UE as claimed in claim 59 or 60 and the base station as claimed in claim 61 or 62;
or comprising the UE as claimed in claim 63 and the base station as claimed in claim 64;
or comprising the UE as claimed in claim 65;
or comprising the UE as claimed in any one of claims 66-68;
or comprising the UE as claimed in claim 69;
or comprising the UE as claimed in claim 70 and the base station as claimed in claim 71 or 72.

74. A computer-readable program, wherein when the program is executed in UE, the program enables a computer to carry out the method for feeding back information as claimed in any one of claims 1-11, 14 and 16-56 in the UE.

75. A storage medium in which a computer-readable program is stored, wherein the computer-readable program enables a computer to carry out the method for feeding back information as claimed in any one of claims 1-11, 14 and 16-56 in UE.

76. A computer-readable program, wherein when the program is executed in a base station, the program enables a computer to carry out the method for configuring information as claimed in any one of claims 12, 13, 15, 57 and 58 in the base station.

77. A storage medium in which a computer-readable program is stored, wherein the computer-readable program enables a computer to carry out the method for configuring information as claimed in any one of claims 12, 13, 15, 57 and 58 in a base station.

101

When the number of bits of a CSI request is 1 and an aperiodic report is triggered, a maximum number of physical resource blocks used for feedback by the UE is one of 5-8

**Fig. 1**

201

When the number of bits of a CSI request is 2 and an aperiodic report of one cell is triggered, the maximum number of physical resource blocks used for feedback by the UE is one of 5-8

**Fig. 2**

301

When the number of bits of a CSI request is 2 and an aperiodic report of multiple cells is triggered, the maximum number of physical resource blocks used for feedback by the UE is one of 25-40

**Fig. 3**

401

When the number of bits of a CSI request is 2 and an aperiodic report of multiple pieces of CSI is triggered, the maximum number of physical resource blocks used for feedback by the UE is one of 25-40

**Fig. 4**

EP 2 996 272 A1

500

501

Feedback unit

**Fig. 5**

601

The maximum number of physical resource blocks for feedback configured by a base station for the UE is one of 5-8, when the number of bits of a CSI request is 1 and an aperiodic report is triggered

**Fig. 6**

701

The maximum number of physical resource blocks for feedback configured by a station for the UE is one of 5-8, when the number of bits of a CSI request is 2 and an aperiodic report of one cell is triggered

**Fig. 7**

801

The maximum number of physical resource blocks for feedback configured by a base station for the UE is one of 25-40, when the number of bits of a CSI request is 2 and an aperiodic report of multiple cells is triggered

**Fig. 8**

901

The maximum number of physical resource blocks for feedback configured by a station for the UE is one of 25-40, when the number of bits of a CSI request is 2 and an aperiodic report of multiple pieces of CSI is triggered

**Fig. 9**

1000

1001

Configuring unit

**Fig. 10**

1101

UE does not expect to receive a signaling of configuring different codebooks for a CSI process of a reference RI and for a linked CSI process, when a base station configures the UE with the CSI process of the reference RI

**Fig. 11**

1200

1201

Feedback unit

**Fig. 12**

1301

a base station configures a CSI process of a
reference RI of UE  with the same codebooks as
those of a linked CSI process

**Fig. 13**

1400

1401

Configuring unit

**Fig. 14**

1501

When subband granularities of a PMI and a
CQI are different, UE selects a relatively small
subband granularity as a joint subband
granularity of the PMI and CQI

**Fig. 15**

1600

1601

Feedback unit

**Fig. 16**

1701

UE limits a size of a wideband first PMI within a range not exceeding 3 bits, when the UE uses a sub-mode 1 of a periodic feedback mode 1-1 and a rank is 1 or 2

Fig. 17

1801

UE feeds back in using a periodic feedback mode 2-1, a subband second PMI, a subband CQI and a subband label index in a third frame by using 11 bits

Fig. 18

1901

UE limits a size of the wideband first PMI within a range not exceeding 3 bits, when the UE uses a sub-mode 2 of a periodic feedback mode 1-1 and the rank is greater than or equal to 2

Fig. 19

2000

2001

Feedback unit

Fig. 20

2101

UE feeds back a subband PMI, a subband CQI
and a subband label index by using one frame

**Fig. 21**

2200

2201

Feedback unit

**Fig. 22**

2301

UE reports to a base station indication information
indicating a feedback granularity, so that the base
station obtains an adjusted feedback granularity of the
UE according to the indication information

**Fig. 23**

Subband1  Subband2  Subband3  Subband4  Subband5  Subband6  Subband7  Subband8  Subband9

0　　　　0　　　　1　　　　0　　　　0　　　　1　　　　0　　　　0　　　　0

Subband3　　　　Subband10　Subband6　　　　Subband11

## Fig. 24

2500

2501

Feedback unit

## Fig. 25

2601

a base station configures UE with N, so that the UE selects
N subbands from K subbands for feedback

2602

the base station receives indication information indicating a
feedback granularity reported by UE, so that the base
station obtains an adjusted feedback granularity of the UE
according to the indication information

## Fig. 26

Fig. 27

Fig. 28

# INTERNATIONAL SEARCH REPORT

International application No.

PCT/CN2013/075501

### A. CLASSIFICATION OF SUBJECT MATTER

See the extra sheet

According to International Patent Classification (IPC) or to both national classification and IPC

### B. FIELDS SEARCHED

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

VEN, CPRSABS, CNTXT, CNKI: (information s feedback), (feed w back), mode, type, PMI, RI, CQI, (channel w state w information), non-periodic, aperiodic, (mode w 3-2), resource, (physical w resource w block), PRB, number?, sub-band, bandwidth, order?, maximum, rank

### C. DOCUMENTS CONSIDERED TO BE RELEVANT

| Category* | Citation of document, with indication, where appropriate, of the relevant passages | Relevant to claim No. |
|---|---|---|
| X | CN 102307083 A (INST TELECOM SCI&TECHNOLOGY MIN O) 04 January 2012 (04.01.2012) see description, page 5, paragraphs [0050]-[0061], claims 10-15 | 8, 46, 69 |
| A | The whole document | 1-7, 9-45, 47-68, 70-77 |
| X | CN 101807981 A (ZTE CORP.) 18 August 2010 (18.08.2010) see description, page 4, paragraphs [0059]-[0066], claims 1-4 | 14, 15, 63, 64 |
| A | The whole document | 1-13, 16-62, 65-77 |
| A | CN 102263584 A (INST TELECOM SCI&TECHNOLOGY MIN O) 30 November 2011 (30.11.2011) the whole document | 1-77 |
| A | CN 102868500 A (HUAWEI TECHNOLOGIES CO., LTD.) 09 January 2013 (09.01.2013) the whole document | 1-77 |

☒ Further documents are listed in the continuation of Box C.          ☒ See patent family annex.

| | | |
|---|---|---|
| *    Special categories of cited documents: | "T" | later document published after the international filing date or priority date and not in conflict with the application but cited to understand the principle or theory underlying the invention |
| "A"    document defining the general state of the art which is not considered to be of particular relevance | | |
| "E"    earlier application or patent but published on or after the international filing date | "X" | document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O"    document referring to an oral disclosure, use, exhibition or other means | | |
| "P"    document published prior to the international filing date but later than the priority date claimed | "&"document member of the same patent family | |

| Date of the actual completion of the international search | Date of mailing of the international search report |
|---|---|
| 07 February 2014 (07.02.2014) | 27 February 2014 (27.02.2014) |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>LIU, Xinke<br><br>Telephone No. (86-10) 62411274 |
|---|---|

Form PCT/ISA /210 (second sheet) (July 2009)

## INTERNATIONAL SEARCH REPORT

| | International application No. |
|---|---|
| | PCT/CN2013/075501 |

C (Continuation).　　　DOCUMENTS CONSIDERED TO BE RELEVANT

| Category* | Citation of document, with indication, where appropriate, of the relevant passages | Relevant to claim No. |
|---|---|---|
| A | CN 102291228 A (INST TELECOM SCI&TECHNOLOGY MIN O) 21 December 2011 (21.12.2011) the whole document | 1-77 |
| A | CN 101867447 A (ZTE CORP.) 20 October 2010 (20.10.2010) the whole document | 1-77 |

Form PCT/ISA /210 (continuation of second sheet) (July 2009)

## INTERNATIONAL SEARCH REPORT
Information on patent family members

| | International application No. |
|---|---|
| | PCT/CN2013/075501 |

| Patent Documents referred in the Report | Publication Date | Patent Family | Publication Date |
|---|---|---|---|
| CN 102307083 A | 04.01.2012 | None | |
| CN 101807981 A | 18.08.2010 | None | |
| CN 102263584 A | 30.11.2011 | None | |
| CN 102868500 A | 09.01.2013 | WO 2013004198 A1 | 10.01.2013 |
| CN 102291228 A | 21.12.2011 | None | |
| CN 101867447 A | 20.10.2010 | JP 2013527690 A | 26.07.2013 |
| | | EP 2566085 A1 | 06.03.2013 |
| | | WO 2011134322 A1 | 03.11.2011 |
| | | US 2013064128 A1 | 14.03.2013 |
| | | KR 20130028086 A | 18.03.2013 |

Form PCT/ISA/210 (patent family annex) (July 2009)

# INTERNATIONAL SEARCH REPORT

| International application No. |
| --- |
| PCT/CN2013/075501 |

Continuous: page 2

A.   CLASSIFICATION OF SUBJECT MATTER

H04L 1/00 (2006.01) i

H04L 1/18 (2006.01) i

Form PCT/ISA /210 (extra sheet) (July 2009)